# EUROPÄISCHE PATENTSCHRIFT

(11) **EP 1 284 981 B1**
(45) Veröffentlichungstag und Bekanntmachung des Hinweises auf die Patenterteilung: **11.07.2007**
(21) Anmeldenummer: 01951531.1
(22) Anmeldetag: 30.05.2001
(51) Int. Cl.: C07F 17/00, C08F 10/00, C08F 4/60

(54) **VERFAHREN ZUR HERSTELLUNG VON ÜBERGANGSMETALLVERBINDUNGEN UND DEREN VERWENDUNG ZUR POLYMERISATION VON OLEFINEN**
METHOD FOR PRODUCING TRANSITION METAL COMPOUNDS AND THEIR USE FOR THE POLYMERIZATION OF OLEFINS
PROCEDE DE PREPARATION DE COMPOSES DE METAUX DE TRANSITION ET LEUR UTILISATION POUR POLYMERISER DES OLEFINES

(30) Priorität: 31.05.2000 DE 10026786; 03.11.2000 DE 10054649
(43) Veröffentlichungstag der Anmeldung: 26.02.2003
(73) Patentinhaber: Basell Polyolefine GmbH, 50389 Wesseling (DE)
(72) Erfinder: SCHOTTEK, Jörg, 60486 Frankfurt (DE); ERKER, Gerhard, 48159 Münster (DE); KUNZ, Klaus, 40235 Düsseldorf (DE); DÖRING, Steve, 40591 Düsseldorf (DE)
(86) Internationale Anmeldenummer: PCT/EP2001/006128
(87) Internationale Veröffentlichungsnummer: WO 2001/092269

(56) Entgegenhaltungen:
- JP-A- 8 198 910
- BAKER, R. THOMAS ET AL: "New (.eta.-C5Me5)M(PR2)x complexes (M = tantalum, molybdenum, and tungsten): reversible P-H bond activation, sp3 C-H bond activation, and P-C bond formation" ORGANOMETALLICS , 12(3), 830-41 CODEN: ORGND7; ISSN: 0276-7333, 1993, XP002336017
- BERTULEIT, AXEL ET AL: "Developing a fulvene route to C1-bridged "constrained geometry" Ziegler catalyst systems" TOPICS IN CATALYSIS ( 1999 ), 7(1-4), 37-44 CODEN: TOCAFI; ISSN: 1022-5528, 1999, XP002336018
- DUDA, LOTHAR ET AL: "Formation of a constrained-geometry Ziegler catalyst system containing a C1 instead of the usual Si1 connection between the cyclopentadienyl and amido ligand components" EUROPEAN JOURNAL OF INORGANIC CHEMISTRY ( 1998 ), (8), 1153-1162 CODEN: EJICFO; ISSN: 1434-1948, 1998, XP002336019

## Beschreibung

Die vorliegende Erfindung betrifft ein Verfahren zur Herstellung von speziellen Übergangsmetallverbindungen, neue Übergangsmetallverbindungen und deren Verwendung zur Polymerisation von Olefinen

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen.

Die Herstellung und Verwendung von Monocyclopentadienylverbindungen ist an sich bekannt und sind beispielsweise in EP-A-0416815 und US 5026798 beschrieben. Dazu können zum Beispiel Cyclopentadienyl-Metall-Verbindungen mit Halogeniden oder Amiden von Übergangsmetallen wie Titan, Zirkonium und Hafnium umgesetzt werden.

Diese dort beschrieben "Constraind-geometry"-Katalysatoren zeichnen sich vor allem durch gute Copolymerisationseigenschaften auf Basis von Ethylen und höheren Olefinen aus.

Durch Veränderungen der Brückenatome zwischen Cyclopentadienylliganden und Koordinationsstelle am Metallatom können Veränderungen in der Aktivität und im Copolymerisations-Verhalten erreicht werden. Hierzu sind einige verschiedene Brücken bekannt und z.B. in Organometallics 2000, 19, 2556-2563 beschrieben. Diese Verbindungen weisen aber nicht die klassische constraind-geometry auf und sind daher für eine technische Nutzung nicht zu verwenden.

Zudem verläuft die Darstellung dieser Komplexen über eine mehrstufige Synthese in zum Teil schlechten Ausbeuten, dieses führt unmittelbar zu erhöhten Kosten und damit zu einer nur begrenzt kommerziellen Nutzung.

Es bestand somit die Aufgabe einen neuen synthetischen Zugang zu dieser Verbindungsklasse zu finden, der die Nachteile des beschriebenen Stands der Technik vermeidet.

Es wurde nun überraschenderweise gefunden, daß ausgehend von substituierten oder unsubstituierten Aminofulven ein universeller Zugang zu der oben beschriebenen Verbindungsklasse ermöglicht wird und somit die der Erfindung zugrunde liegende Aufgabe gelöst wird.

Gegenstand der vorliegenden Erfindung ist ein Verfahren zur Herstellung von Verbindungen der Formel (VII) 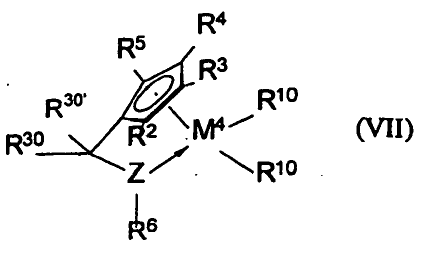 worin
- R³⁰: ein Wasserstoffatom, C₁-C₁₈-Alkyl, wie Methyl, Ethyl, n-Butyl, n-Hexyl, tert.-Butyl, Isopropyl, Isobutyl, Cyclopentyl, Cyclohexyl oder Octyl, C₃ - C₁₂-Cycloalkyl, C₂-C₁₀-Alkenyl, C₃-C₁₅-Alkylalkenyl, C₆-C₁₈-Aryl, wie Phenyl, Tolyl, Xylyl, C₅-C₁₈-Heteroaryl, wie Furanyl, Pyridinyl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist, bevorzugt Wasserstoff, C₁-C₁₈-Alkyl, wie Methyl, Ethyl, n-Butyl, n-Hexyl, tert.-Butyl, Isopropyl, Isobutyl, C₆-C₁₈-Aryl, wie Phenyl, Tolyl Xylyl, besonders bevorzugt Wasserstoff, Methyl, Ethyl, n-Butyl, n-Hexyl, tert.-Butyl, Phenyl und Tolyl ist,
- R^{30'}: ein Wasserstoffatom oder C₁-C₁₈-Alkyl ist,
- R²,: R³, R⁴, R⁵ gleich oder verschieden ein Wasserstoffatom, C₁-C₁₈-Alkyl, wie Methyl, Ethyl, n-Butyl, n-Hexyl, Isopropyl, Isobutyl, Cyclopentyl, C₃ - C₁₂ Cycloalkyl , Cyclohexyl oder Octyl, C₂-C₁₀-Alkenyl, C₃-C₁₅-Alkylalkenyl, C₆-C₁₈-Aryl, C₅-C₁₈-Heteroaryl, wie Furanyl, Pyridinyl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist, bevorzugt C₁-C₁₈-Alkyl, wie Methyl, Ethyl, n-Butyl, n-Hexyl, tert.-Butyl, Isopropyl, Isobutyl C₆-C₁₈-Aryl, wie Phenyl Tolyl Xylyl, besonders bevorzugt Methyl, Ethyl, n-Butyl, n-Hexyl, tert.-Butyl, Phenyl und Tolyl ist, die Reste R², R³, R⁴ und R⁵ können miteinander cyclische Systeme bilden, wie Indenyle, Benzindenyle, Fluoreyl und Phenanthryl, die ihrerseits wiederum substituiert sein können,
- R⁶: ein Wasserstoffatom, C₁-C₁₈-Alkyl, wie Methyl, Ethyl, n-Butyl, n-Hexyl, tert.-Butyl, Isobutyl, Isopropyl, Cyclopentyl, C₃-C₁₂-Cycloalkyl, Cyclohexyl oder Octyl, C₂-C₁₀-Alkenyl, C₃-C₁₅-Alkylalkenyl, C₆-C₁₈-Aryl, wie Phenyl, Tolyl, Xylyl, C₅-C₁₈-Heteroaryl, wie Furanyl, Pyridinyl, C₇-C₂₀-Arylalkyl, C₇-C₂₀-Alkylaryl, bevorzugt Wasserstoff, C₁-C₁₈-Alkyl, wie Methyl, Ethyl, Cyclohexyl C₆-C₁₈-Aryl, wie Phenyl, Tolyl, ist,
- R¹⁰: ein Wasserstoffatom, ein Halogenatom, C₁-C₁₈-Alkyl, wie Methyl, Ethyl, Propyl, Isopropyl, Isobutyl, C₃- C₁₂-Cycloalkyl, ein _{C6}-_{C20} Aryl, wie Phenyl, Tolyl, Xylyl, ein C₆-C₂₀-Aryloxy-Gruppe, wie substituierte oder unsubstituierte Phenoxy und Biphenoxy, eine C₁-C₂₀ Alkyloxy-Gruppe, ein stickstoffhaltiger Rest, bevorzugt Fluor und Chlor, Methyl, Ethyl, Phenyl, substituiertes oder unsubstituiertes Phenoxy, NMe₂, NEt₂, ganz besonders bevorzugt Chlor, NMe₂, NEt₂ ist,
- Z: Phosphor oder Stickstoff ist,
- M⁴: Titan, Zirconium, Hafnium, Vanadium, Niob, Tantal, Chrom, Molybdän oder Wolfram ist,
umfassend die Schritte

### A) Umsetzung einer Verbindung der Formel I

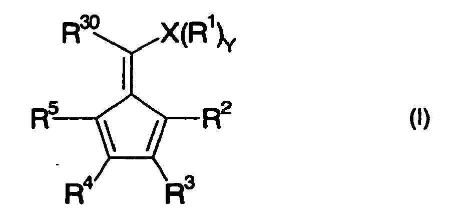

worin,
- R¹: ein Wasserstoffatom, C₁-C₁₈-Alkyl, wie Methyl, Ethyl, n-Butyl, n-Hexyl, tert.-Butyl, Isopropyl, Isobutyl, C₃ - C₁₂ Cycloalkyl, Cyclopentyl, Cyclohexyl oder Octyl, C₂-C₁₀-Alkenyl, C₃-C₁₅-Alkylalkenyl, C₆-C₁₈-Aryl, C₆-C₁₈-Aryl, wie Phenyl, Tolyl, Xylyl, C₅-C₁₈-Heteroaryl, wie Furanyl, Pyridinyl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist, bevorzugt C₁-C₁₈-Alkyl, wie Methyl, Ethyl, n-Butyl, n-Hexyl, tert.-Butyl, Isopropyl, Isobutyl, C₆-C₁₈-Aryl, wie Phenyl, Tolyl Xylyl, besonders bevorzugt Methyl, Ethyl, n-Butyl, n-Hexyl, tert.-Butyl, Phenyl und Tolyl ist und R², R³, R⁴, R⁵ die unter Formel (VII) genannte Bedeutung haben,
- X: Stickstoff,
- y: 2 ist,
mit einer Verbindung der Formel (II),

M¹ R⁶ZR⁷ (II)

worin
- z und R⁶: die unter Formel (VII) genannte Bedeutung haben,
- M¹: ein Element der 1. Gruppe des Periodensystems der Elemente, bevorzugt Lithium, Natrium oder Kalium, besonders bevorzugt Lithium ist,
- R⁷: ein Wasserstoffatom ist,
zu einer Verbindung der Formel (III) 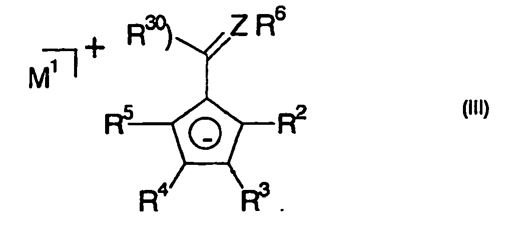 worin R², R³, R⁴, R⁵, R⁶, R³⁰, Z und M¹ die oben beschriebenen Bedeutungen haben

### B) Umsetzung der gemäß Schritt A) erhaltenen Verbindung der Formel (III) mit einer metallorganischen Verbindung der Formel IV

M²R^{30'} (IV)

worin
- M²: ein Element der 1. oGruppe des Periodensystems der Elemente, bevorzugt Lithium, Natrium oder Kalium, besonders bevorzugt Lithium ist,
- R^{30'}: ein Wasserstoffatom oder C₁-C₁₈-Alkyl ist, wie Methyl, Ethyl, n-Butyl, n-Hexyl, tert.-Butyl, sec.-Butyl, besonders bevorzugt Methyl, n-Butyl, sec.-Butyl, zu einer Verbindung der Formel (V) 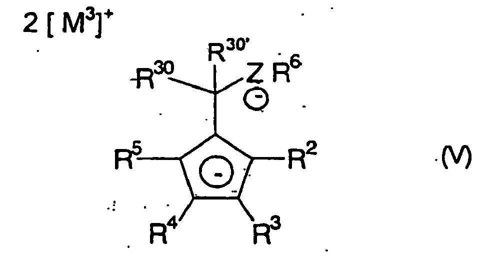
worin
R², R³, R⁴, R⁵, R⁶, R³⁰, R^{30'} und Z die oben beschriebene Bedeutung haben und
- M³: ein Element der 1. Gruppe des Periodensystems der Elemente, bevorzugt Lithium, Natrium oder Kalium, besonders bevorzugt Lithium ist und die gleiche Bedeutung wie M¹ oder M² hat,

### C) Umsetzung der gemäß Schritt B) erhaltenen Verbindung der Formel (V) mit einer Verbindung der Formel (VI)

M⁴(R⁹)_{f}(R¹⁰)_{g}(R¹¹)ₖ (VI)

worin
- M⁴: Titan, Zirconium, Hafnium, Vanadium, Niob, Tantal, Chrom, Molybdän oder Wolfram ist,
- R⁹: ein Wasserstoffatom, ein Halogenatom, eine C₁-C₂₀ Kohlenstoffgruppe, wie Methyl, Ethyl, Propyl, Isopropyl, ein C₆-C₂₀ Aryl, wie Phenyl, Tolyl, Xylyl, eine C₆-C₂₀-Aryloxy-Gruppe, wie substituierte oder unsubstituierte Phenoxy und Biphenoxy, bevorzugt Fluor und Chlor, Methyl, Ethyl, Phenyl, substituiertes oder unsubstituiertes Phenoxy, ganz besonders bevorzugt Chlor, Methyl, Phenyl ist,
- R¹⁰: ein Wasserstoffatom, ein Halogenatom, C₁-C₁₈-Alkyl, wie Methyl, Ethyl, Propyl, Isopropyl, Isobutyl, C₃- C₁₂ Cycloalkyl, ein C₆-C₂₀ Aryl, wie Phenyl, Tolyl, Xylyl, eine C₆-C₂₀-Aryloxy-Gruppe, wie substituierte oder unsubstituierte Phenoxy und Biphenoxy, ein stickstoffhaltiger Rest, eine C₁-C₂₀-Alkoxy-Gruppe bevorzugt Fluor und Chlor, Methyl, Ethyl, Phenyl, substituiertes oder unsubstituiertes Phenoxy, NMe₂, NEt₂, ganz besonders bevorzugt Chlor, NMe₂, NEt₂ ist,
- R¹¹: C₁-C₂₀-Heterokohlenstoffverbindung ist, bevorzugt eine C₁-C₂₀-Heterokohlenstoffgruppe lineare oder cyclische oder aromatische Ether, Thiole, wie Diethylether, Methyl-tert-butylether, Dimethoxyethan, Diisopropylether, Di-n-butylether, Tetrahydrofuran, Tetrahydrothiophen, ganz besonders bevorzugt Diethylether und Tetrahydrofuran ist.
- f: 2 ist,
- g: 2 ist,
- k: eine Zahl von 1-10, bevorzugt 1-6, ganz bevorzugt 2 ist.
zur Verbindung der allgemeinen Formel (VII).

Zunächst kann eine Verbindung der Formel (I) in einem Reaktionsgefäß vorgelegt werden. Die Verbindungen können entweder in einem Lösemittel gelöst oder suspendiert sein, oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol oder Mischungen von diesen. Die Vorlage erfolgt bei Temperaturen zwischen -100°C und 300°C, bevorzugt zwischen -80°C und 200°C, insbesondere bevorzugt bei Temperaturen zwischen 20°C und 150°C. Die verbindung der Formel (I) sollte vorteilhafterweise in flüssiger Phase vorliegen.

Anschließend kann die Zugabe einer Verbindung der Formel (II) erfolgen. Diese können ebenfalls in einem Lösemittel gelöst oder suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt im allgemeinen bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird in der Regel so gewählt, daß zumindest ein Reaktionspartner in flüssiger Phase vorliegen. Die anschließende Reaktionstemperatur liegt im allgemeinen in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das molare Verhältnis in dem Verbindungen der Formel (I) und (II) zusammengegeben werden, bezogen auf eingesetzter Menge M¹ der Verbindungen der Formel (I), liegt zwischen 1 : 1000 und 1 : 0.01. Bevorzugt ist ein Verhältnis zwischen Verbindungen der Formel (I) und (II) zu eingesetzter Menge M¹, gemäß Formel (I), zwischen 1 :100 und 1 : 0.1. Besonders bevorzugt ist eine stöchiometrische Umsetzung bezogen auf die Verbindungen der Formel (I) und (II).

Die Verbindungen der Formel II können in Reinsubstanz eingesetzt oder in situ aus einer Base wie Lithiumdiisopropylamid und einem Amin generiert werden. Nicht einschränkende Beispiele für die bevorzugten Verbindungen der Formel (II) sind: Lithiumphosphid, Lithiumcyclohexylphosphid, Lithiumcyclopentylphosphid Lithiumphenylphospid, Lithium-methylphospid, Lithiumtertbutylphospid, Lithium-2, 6-(diisopropyl)phenylphospid, Lithium-ethylphospid, Lithium-isopropylphospid, Lithium-2, 6-(ditert.butyl)phenylphospid, Lithium-2, 6-(dimethyl)phenylphospid, Lithium-2, 6-(diethyl)phenylphospid, Lithium-3-methylphenylphospid, Lithium-3-ethylphenylphospid, Lithium-2, 5-(diisopropyl)phenylphospid, Lithium-4-ethylphenylphospid, Lithium-4-isopropylphenylphospid, Lithium-2, 5-(ditert.butyl)phenylphospid, Lithium-2, 5-(dimethyl)phenylphospid, Lithium-2, 5-(diethyl)phenylphospid, Lithium-2, 3-(diisopropyl)phenylphospid, Lithium-2, 3-(ditert.butyl)phenylphospid, Lithium-2, 3-(dimethyl)phenylphospid, Lithium-2, 3-(diethyl)phenylphospid, Lithium-2, 4-(diisopropyl)phenylphospid, Lithium-2, 4-(ditert.butyl)phenylphospid, Lithium-2, 4-(dimethyl)phenylphospid, Lithium-2, 4-(diethyl)phenylphospid, Natriumphenylphospid, Natrium-4-methylphenylphospid, Natriumtertbutylphenylphospid, Natriumtertbutylphosphid, Natrium-2, 6-(diisopropyl)phenylphospid, Natrium-4-ethylphenylphospid, Natrium-4-isopropylphenylphospid, Natrium-2, 6-(ditert.butyl)phenylphospid, Natrium-2, 6-(dimethyl)phenylphospid, Natrium-2, 6-(diethyl)phenylphospid, Natrium-3-methylphenylphospid, Natrium-3-ethylphenylphospid, Natrium-2, 5-(diisopropyl)phenylphospid, Natrium-4-ethylphenylphospid, Natrium-4-isopropylphenylphospid, Natrium-2, 5-(ditert.butyl)phenylphospid, Natrium-2, 5-(dimethyl)phenylphospid, Natrium-2, 5-(diethyl)phenylphospid, Natrium-2, 3-(diisopropyl)phenylphospid, Natrium-4-ethylphenylphospid, Natrium-4-isopropylphenylphospid, Natrium-2, 3-(ditert.butyl)phenylphospid, Natrium-2, 3-(dimethyl)phenylphospid, Natrium-2, 3-(diethyl)phenylphospid, Natrium-2, 4-(diisopropyl)phenylphospid, Natrium-4-ethylphenylphospid, Natrium-isopropylphospid, Natrium-2, 4-(ditert.butyl)phenylphospid, Natrium-2, 4-(dimethyl)phenylphospid, Natrium-2, 4-(diethyl)phenylphospid, Kaliumphenylphospid, Kalium-methylphospid, Kaliumtertbutylphenylphospid, Kaliumtertbutylphosphid, Kalium-2, 6-(diisopropyl)phenylphospid, Kalium-4-ethylphenylphospid, Kalium-4-isopropylphenylphospid, Kalium-2, 6-(ditert.butyl)phenylphospid, Kalium-2, 6-(dimethyl)phenylphospid, Kalium-2, 6-(diethyl)phenylphospid, Kalium-3-methylphenylphospid, Kalium-3-ethylphenylphospid, Kalium-2, 5-(diisopropyl)phenylphospid, Kalium-4-ethylphenylphospid, Kalium-4-isopropylphenylphospid, Kalium-2, 5-(ditert.butyl)phenylphospid, Kalium-2, 5-(dimethyl)phenylphospid, Kalium-2, 5-(diethyl)phenylphospid, Kalium-2, 3-(diisopropyl)phenylphospid, Kalium-4-ethylphenylphospid, Kalium-4-isopropylphenylphospid, Kalium-2, 3-(ditert.butyl)phenylphospid, Kalium-2, 3-(dimethyl)phenylphospid, Kalium-2, 3-(diethyl)phenylphospid, Kalium-2, 4-(diisopropyl)phenylphospid, Kalium-4-ethylphenylphospid, Kalium-4-isopropylphenylphospid, Kalium-2, 4-(ditert.butyl)phenylphospid, Kalium-2, 4-(dimethyl)phenylphospid, Kalium-2, 4-(diethyl)phenylphospid

Im nächsten Schritt können eine oder mehrere Verbindung der Formel (III) in einem Reaktionsgefäß vorgelegt werden. Die Verbindungen können entweder in einem Lösemittel gelöst oder suspendiert sein, oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol oder Mischungen von diesen. Die Vorlage erfolgt in der Regel bei Temperaturen zwischen -100°C und 300°C, bevorzugt zwischen -80°C und 200°C, insbesondere bevorzugt bei Temperaturen zwischen 20°C und 150°C. Die Verbindung der Formel (III) sollte vorteilhafterweise in flüssiger Phase vorliegen.

Anschließend kann die Zugabe einer oder mehrerer Verbindungen der Formel (IV) erfolgen. Diese können ebenfalls in einem Lösemittel gelöst oder suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt in der Regel bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird in der Regel so gewählt, daß zumindest ein Reaktionspartner in flüssiger Phase vorliegen. Die anschließende Reaktionstemperatur liegt in der Regel in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das Verhältnis in dem Verbindungen der Formel (III) und (IV) zusammengegeben werden, bezogen auf eingesetzter Menge M² der Verbindungen der Formel (IV), liegt in der Regel zwischen 1 : 1000 und 1 : 0.01. Bevorzugt ist ein molares Verhältnis zwischen Verbindungen der Formel (III) und (IV) zu eingesetzter Menge M², gemäß Formel (IV), zwischen 1 :100 und 1 : 0.1.

Besonders bevorzugt ist eine stöchiometrische Umsetzung bezogen auf die Verbindungen der Formel (III) und (IV).

Die Verbindung V kann isoliert oder in situ dargestellt und umgesetzt werden.

Im nächsten Schritt können eine oder mehrere Verbindung der Formel (V) in einem Reaktionsgefäß vorgelegt werden. Die Verbindungen können entweder in einem Lösemittel gelöst oder suspendiert sein, oder aber auch in Substanz vorliegen. Als Lösemittel dienen in der Regel aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol oder Mischungen von diesen. Die Vorlage erfolgt in der Regel bei Temperaturen zwischen -100°C und 300°C, bevorzugt zwischen -80°C und 200°C, insbesondere bevorzugt bei Temperaturen zwischen 20°C und 150°C. Die Verbindung der Formel (V) sollte vorteilhafterweise in flüssiger Phase vorliegen.

Anschließend kann die Zugabe einer oder mehrerer Verbindungen der Formel (VI) erfolgen. Diese können ebenfalls in einem Lösemittel gelöst oder suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt in der Regel bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das Verhältnis in dem Verbindungen der Formel (V) und (VI) zusammengegeben werden, bezogen auf eingesetzter Menge M³ der Verbindungen der Formel (V), liegt zwischen 1: 1000 und 1 : 0.01. Bevorzugt ist ein stöchiometrisches Verhältnis zwischen Verbindungen der Formel (V) und (VI) zu eingesetzter Menge M³, gemäß Formel (VI), zwischen 1 :100 und 1 : 0.1. Besonders bevorzugt ist eine stöchiometrische Umsetzung bezogen auf die Verbindungen der Formel (V) und (VI).

Die vorliegende Erfindung betrifft außerdem eine erfindungsgemäße chemische Verbindung der Formel (VII - A) 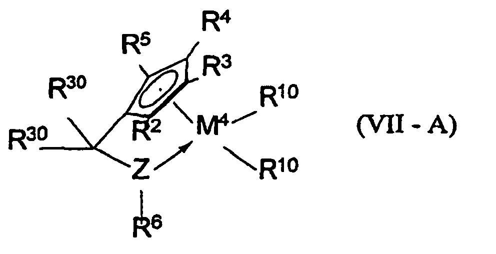 worin
- R³⁰: ein Wasserstoffatom, C₁-C₁₈-Alkyl, wie Methyl, Ethyl, n-Butyl, n-Hexyl, tert.-Butyl, Isopropyl, Isobutyl, C₃-C₁₂-Cycloalkyl, Cyclopentyl, Cyclohexyl oder Octyl, C₂-C₁₀-Alkenyl, C₃-C₁₅-Alkylalkenyl, C₆-C₁₈-Aryl, C₆-C₁₈-Aryl, wie Phenyl, Tolyl, Xylyl, C₅-C₁₈-Heteroaryl, wie Furanyl, Pyridinyl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist, bevorzugt Wasserstoff, C₁-C₁₈-Alkyl, wie Methyl, Ethyl, n-Butyl, n-Hexyl, tert.-Butyl, Isopropyl, Isobutyl, C₆-C₁₈-Aryl, wie Phenyl, Tolyl Xylyl, besonders bevorzugt Wasserstoff, Methyl, Ethyl, n-Butyl, n-Hexyl, tert.-Butyl, Phenyl und Tolyl ist, wobei die R³⁰-Substituenten nicht gemeinsam die gleiche Bedeutung haben oder gemeinsam die gleiche Bedeutung haben können,
- R², R³, R⁴, R⁵: gleich oder verschieden ein Wasserstoffatom, C₁-C₁₈-Alkyl, wie Methyl, Ethyl, n-Butyl, n-Hexyl, Isopropyl, Isobutyl, C₃ - C₁₂ Cycloalkyl, Cyclopentyl, Cyclohexyl oder Octyl, C₂-C₁₀-Alkenyl, C₃-C₁₅-Alkylalkenyl, C₆-C₁₈-Aryl, C₅-C₁₈-Beteroaryl, wie Furanyl, Pyridinyl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist, bevorzugt C₁-C₁₈-Alkyl, wie Methyl, Ethyl, n-Butyl, n-Hexyl, tert.-Butyl, Isopropyl, Isobutyl C₆-C₁₈-Aryl, wie Phenyl Tolyl Xylyl, besonders bevorzugt Methyl, Ethyl, n-Butyl, n-Hexyl, tert.-Butyl, Phenyl und Tolyl ist, die Reste R², R³, R⁴ und R⁵ können miteinander cyclische Systeme bilden, wie Indenyle, Benzindenyle, Fluoreyl und Phenanthryl, die ihrerseits wiederum substituiert sein können,
- R⁶: ein Wasserstoffatom, C₁-C₁₈-Alkyl, wie Methyl, Ethyl, n-Butyl, n-Hexyl, Isopropyl, Isobutyl, C₃ - C₁₂ Cycloalkyl, Cyclopentyl, Cyclohexyl oder Octyl, C₂-C₁₀-Alkenyl, C₃-C₁₅-Alkylalkenyl, C₆-C₁₈-Aryl, C₅-C₁₈-Heteroaryl, wie Furanyl, Pyridinyl, C₇-C₂₀-Arylalkyl, C₇-C₂₀-Alkylaryl, bevorzugt C₁-C₁₈-Alkyl, wie Methyl, Ethyl, n-Butyl, n-Hexyl, tert.-Butyl, Isopropyl, Isobutyl C₆-C₁₈-Aryl, wie Phenyl Tolyl Xylyl, besonders bevorzugt Methyl, Ethyl Cyclohexyl, n-Butyl, n-Hexyl, tert.-Butyl, Phenyl und Tolyl ist,
- R¹⁰: ein Wasserstoffatom, ein Halogenatom, eine C₁-C₂₀ Kohlenstoffgruppe, wie Methyl, Ethyl, Propyl, Isopropyl, Isobutyl, ein C₆-C₂₀ Aryl, wie Phenyl, Tolyl, Xylyl, ein C₆-C₂₀-Aryloxy-Gruppe, wie substituierte oder unsubstituierte Phenoxy und Biphenoxy, eine C₁-C₂₀ Alkyloxy-Gruppe, ein stickstoffhaltiger Rest, bevorzugt Fluor und Chlor, Methyl, Ethyl, Phenyl, substituiertes oder unsubstituiertes Phenoxy, NMe₂, NEt₂, ganz besonders bevorzugt Chlor, NMe₂, NEt₂ ist,
- Z: Phospohor ist,
- M⁴: Titan, Zirconium, Hafnium, Vanadium, Niob, Tantal, Chrom, Molybdän oder Wolfram ist.

Die Dichloro- und Diamidoverbindungen können nach literturbekannten Vorschriften zu den entsprechenen Butadien- (EP-A-0687682) oder Bisphenol-Komplexen (DE-A- 19900732) umgesetzt werden.

Nicht einschränkende Beispiele für die erfindungsgemäße Verbindung der Formel VII oder (VII - A) sind:
Bis(dimethylamido){η⁵ :κP-1-(P-tolylphosphido)*2,2 methylpropyliden*cyclopentadienyl}titan
Bis(dimethylamido){η⁵:κP-1-(P-cyclohexylphosphido)*2,2 methylpropyliden-*cyclopenta-dienyl}titan
Bis(dimethylamido){η⁵:κP-1-(P-cyclohexylphosphido)*1-methylethyliden*-cyclopentadienyl}titan
Bis(dimethylamido){η⁵:κP-1-(P-cyclohexylphosphido)*1-methylethyliden*-cyclopenta-dienyl}zirconium
Bis(diethylamido)(η⁵ : κP-1-(P-Phenylphospido)ethylidencyclopentadienyl)zirconium
Bis(diethylamido){η⁵:κP-1-(P-phenylphospido)-p-tolylmethylidencyclopentadienyl}-zirconium
Bis(diethylamido){η⁵:κP-1-(P-tolylphosphido)*2,2 methylpropyliden-*cyclopentadienyl}-zirconium
Bis(diethylamido){η⁵:κP-1-(P-*tert*butylphospido)*2,2 methylpropyliden*cyclopentadienyl}-zirconium
Bis(diethylamido){η⁵:κN-(P-*tert*butylphospido)methyliden-2,3,4,5-tetramethylcyclopentadienyl}zirconium
Bischloro{η⁵:κP-1-(P-tolylphosphido)*2,2 methylpropyliden*-2,3,4,5-tetramethylcyclopentadienyl}titan
Bischloro(η⁵ : κP-1-(P-Phenylphospido)ethyliden-2,3,4,5-tetramethyl cyclopentadienyl)zirconium
Bischloro{η⁵:κP-1-(P-phenylphospido)-p-tolylmethyliden-2,3,4,5-tetramethyl cyclopentadienyl}zirconium
Bischloro{η⁵:κP-1-(P-tolylphosphido)2,2 *methylpropyli*den-2,3,4,5-tetramethyl cyclopentadienyl}-zirconium
Bischloro{η⁵:κP-1-(P-tertbutylphospido)2,2 *methylpropyli*den-2,3,4,5-tetramethyl cyclopentadienyl}-zirconium
Bischloro{η⁵:κN-(P-tertbutylphospido)methyliden-2,3,4,5-tetramethylcyclopentadienyl}zirconium
Bischloro{η⁵:κP-1-(P-tolylphosphido)*2,2 methylpropyliden*cyclopentadienyl}titan
Bischloro(η⁵ : κP-1-(P-Phenylphospido)ethylidencyclopentadienyl)zirconium
Bischloro{η⁵:κP-1-(P-phenylphospido)-p-tolylmethylidencyclopentadienyl}zirconium
Bischloro{η⁵:κp-1-(P-tolylphosphido)*2,2 methylpropyliden*cyclopentadienyl}-zirconium
Bischloro{η⁵:κP-1-(P-*tert*butylphospido)*2,2 methylpropyliden*cyclopentadienyl}-zirconium
Bischloro{η⁵:κP-(P-*tert*butylphospido)methyliden-2,3,4,5-tetramethylcyclopentadienyl}zirconium
Bischloro{η⁵:κP-1-(P-cyclohexylphosphido)*2,2 methylpropylidency*clopentadienyl}titan
Bischloro(η⁵ : κP-1-(P-cyclohexylphospido)ethylidencyclopentadienyl)zirconium
Bischloro {η⁵ :κP-1- (P-cyclohexylphospido)-p-tolylmethylidencyclopentadienyl}zirconium
Bischloro{η⁵:κP-1-(P-cyclohexylphosphido)*2,2 methylpropylidency*clopentadienyl}-zirconium
Bischloro{η⁵:κP-1-(P-cyclohexylphospido)*2,2 methylpropylidencyclo*pentadienyl}-zirconium
Bischloro{η⁵:κP-(P-*cyclohexyl*phospido)methyliden-2,3,4,5-tetramethylcyclopen-tadienyl}zirconium
Bis (diethylamido) {η⁵:κP-1-(P-tolylphosphido)*2,2 methylpropyliden*cyclopentadienyl}titan
Bis(dimethylamido) (η⁵ : κP-1-(P-Phenylphospido) ethylidencyclopentadienyl)zirconium
Bis (dimethylamido) {η⁵ :κP-1- (P-phenylphospido)-p-tolylmethylidencyclopentadienyl}-zirconium
Bis(dimethylamido){η⁵:κP-1-(P-tolylphosphido)2,2 *methylpropyliden*cyclopentadienyl}-zirconium
Bis (dimethylamido) {η⁵:κP-1-(P- *tert*butylphospido)*2,2 methylpropylidenc*yclopentadienyl}-zirconium
Bis (dimethylamido) {η⁵:κP-(P-*tert*butylphospido)methyliden-2,3,4,5-tetramethylcyclopentadienyl}zirconium
Bis (diethylamido) {η⁵:κP-1-(P-tolylphosphido)*2,2 methylpropyliden*cyclopentadienyl}hafnium
Bis (dimethylamido) (η⁵ : κP-1-(P-Phenylphospido)ethylidencyclopentadienyl)hafnium
Bis(dimethylamido){η⁵:κP-1-(P-phenylphospido)-p-tolylmethylidencyclopentadienyl}-hafnium
Bis (dimethylamido) {η⁵:κP-1-(P-tolylphosphido)*2,2 methylpropyliden*cyclopentadienyl}-hafnium
Bis(dimethylamido) {η⁵:κP-1-(P-*tert*butylphospido)*2,2 methylpropylidenc*yclopentadienyl}-hafnium
Bis (dimethylamido) {η⁵:κN-(P-*tert*butylphospido)methyliden-2,3,4,5-tetramethylcyclopentadienyl}hafnium
Bischloro {η⁵:κN-(P-*tert*butylphospido)methyliden-2,3,4,5-tetramethylcyclopentadienyl}hafnium
Bischloro{η⁵:κP-1-(P-tolylphosphido)*2,2 methylpropyliden*cyclopentadienyl}hafnium
Bischloro(η⁵ : κP-1-(P-Phenylphospido)ethylidencyclopentadienyl)hafnium .
Bischloro{η⁵:κP-1-(P-phenylphospido)-p-tolylmethylidencyclopentadienyl}hafnium
Bischloro{η⁵:κP-1-(P-tolylphosphido)*2,2 methylpropyliden*cyclopentadienyl}-hafnium
Bischloro{η⁵:κP-1-(P-*tert*butylphospido)2,2 *methylpropyliden*cyclopentadienyl}hafnium
Bischloro{η⁵:κP-(P-tertbutylphospidomethyl-2,3,4,5-tetramethylcyclopentadienyl}hafnium
Bis (dimethylamido) {η⁵:κP-1-(P-cyclohexylphospido)2,2 *methylpropylidenc*yclopentadienyl}-hafnium
Bis(dimethylamido) {η⁵:κN-(P-*cyclohexyl*phospido)methyliden-2,3,4,5-tetramethylcyclopen-tadienyl}hafnium
Bischloro{η⁵:κN-(P-*cyclohexyl*phospido)methyliden-2,3,4,5-tetramethylcyclopentadienyl}hafnium
Bischloro {η⁵ :κP-1-(P-cyclohexylphosphido)*2, 2 methylpropylidency*clopentadienyl}hafnium
Bischloro(η⁵: κP-1-(P-cyclohexylphospido)ethylidencyclopentadienyl)hafnium
Bischloro {η⁵ :κP-1-(P-cyclohexylphospido)-p-tolylmethylidencyclopentadienyl}hafnium
Bischloro{η⁵:κP-1-(P-cyclohexylphosphido)*2,2 methylpropylidency*clopentadienyl}-hafnium
Bischloro{η⁵:κP-1-(P-cyclohexylphospido)*2,2 methylpropyliden*cyclopentadienyl}hafnium
Bischloro {η⁵: κP-(P-*cyclohexyl*phospido) methyliden-2,3,4, 5-tetramethylcyclopentadienyl}hafnium
(cis-η⁴-butadien) {η⁵:κP-1-(P-tolylphosphido)*2,2 methylpropyliden*cyclopentadienyl}titan
(cis-η⁴-butadien) (η⁵: κP-1-(P-Phenylphospido) ethylidencyclopentadienyl)zirconium
(cis-η⁴-butadien) {η⁵:κP-1-(P-phenylphospido)-p-tolylmethylidencyclopentadienyl}-zirconium
(cis-η⁴-butadien) {η⁵:κP-1-(P-tolylphosphido)*2,2 methylpropyliden*cyclopentadienyl}-zirconium
(cis-η⁴-butadien) {η⁵:κP-1-(P-*tert*butylphospido)*2,2 methylpropyliden*cyclopentadienyl}-zirconium
(cis-η⁴-butadien) {η⁵:κN-(P-*tert*butylphospido)methyliden-2,3,4,5-tetramethylcyclopen-tadienyl}zirconium
(cis-η⁴-butadien) {η⁵:κP-1-(P-tolylphosphido)*2,2 methylpropyliden*cyclopentadienyl}hafnium
(cis-η⁴-butadien) (η⁵: κP-1-(P-Phenylphospido)ethylidencyclopentadienyl)hafnium
(cis-η⁴-butadien) {η⁵: κP-1-(P-phenylphospido)-P-tolylmethylidencyclopentadienyl}-hafnium
(cis-η⁴-butadien) {η⁵:κP-1-(P-tolylphosphido)*2,2 methylpropyliden*cyclopentadienyl}-hafnium
(cis-η⁴-butadien) {η⁵: κP-1-(P-*tert*butylphospido) *2,2 methylpropyliden*cyclopentadienyl}-hafnium
(cis-η⁴-butadien) {η⁵: κN-(P-*tert*butylphospido)methyliden-2,3,4,5-tetramethylcyclopentadienyl}hafnium
(trans-η⁴-butadien) {η⁵ :κP-1- (P-tolylphosphido) *2, 2 methylpropyliden*cyclopentadienyl}titan
(trans-η⁴-butadien) (η⁵ : κP-1-(P-Phenylphospido)ethylidencyclopentadienyl)zirconium
(trans-η⁴-butadien) {η⁵:κP-1-(P-phenylphospido)-p-tolylmethylidencyclopentadienyl}-zirconium
(trans-η⁴-butadien) {η⁵:κP-1-(P-tolylphosphido)2,2 *methylpropyliden*cyclopentadienyl}-zirconium
(trans-η⁴-butadien) {η⁵ :κP-1- (P-*tert*butylphospido) *2,2 methylpropyliden*cyclopentadienyl}-zirconium
(trans-η⁴-butadien) {η⁵:κP-(P-*tert*butylphospido)methyliden-2,3,4,5-tetramethylcyclopen-tadienyl}zirconium
(trans-η⁴-butadien) {η⁵:κP-1-(P-tolylphosphido) *2, 2 methylpropyliden*cyclopentadienyl}-hafnium
(trans-η⁴-butadien) (η⁵: κP-1-(P-Phenylphospido)ethylidencyclopentadienyl)hafnium
(trans-η⁴-butadien) {η⁵:κP-1-(p-phenylphospido)-p-tolylmethylidencyclopentadienyl}-hafnium
(trans-η⁴-butadien) {η⁵:κP-1-(P-tolylphosphido)*2,2 methylpropyliden*cyclopentadienyl}-hafnium
(trans-η⁴-butadien) {η⁵:κP-1-(P-*tert*hutylphospido)*2,2 methylpropyliden*cyclopentadienyl}-hafnium
(trans-η⁴-butadien) {η⁵:κN-(P-*tert*butylphospido)methyliden-2,3,4,5-tetramethylcyclopentadienyl}hafnium
Bis (phenolato) {η⁵:κP-1-(P-tolylphosphido)*2,2 methylpropyliden*cyclopentadienyl}titan
Bis(phenolato)(η⁵ : κP-1-(P-Phenylphospido)ethylcyclopentadienyl)zirconium
Bis (phenolato) {η⁵:κP-1-(p-phenylphospido)-p-tolylmethylidencyclopentadienyl}zirconium
Bis (phenolato) {η⁵:κP-1-(P-tolylphosphido)*2,2 methylpropylidency*clopentadienyl}-zirconium
Bis (phenolato) {η⁵:κP-1-(P-*tert*butylphospido)*2,2 methylpropyliden*cyclopentadienyl}-zirconium
Bis (phenolato) {η⁵:κN- (P-*tert*butylphospido)methyliden-2,3,4,5-tetramethylcyclopentadienyl}zirconium
Bis(dimethylamido){η⁵:κP-1-(P-tolylphosphido)isopropylmethylidencyclopentadienyl}titan
Bis(diethylamido)(η⁵ : κP-1-(P-tolylphosphido)ethylidencyclopentadienyl)zirconium
Bis (diethylamido) {η⁵:κP-1-(P-phenylphospido)-ethylmethylidencyclopentadienyl}-zirconium
Bis (diethylamido) {η⁵:κP-1-(P-tolylphosphido)*cyclohexyl*methylidencyclopentadienyl}-zirconium
Bis (diethylamido) {η⁵:κP-1- (P-tertbutylphospido) cyclohexylmethylidencyclopentadienyl}-zirconium
Bis (diethylamido) {η⁵:κN-(P-*tert*butylphospido)2,2 methlpropyliden-2,3,4,5-tetramethylcyclopen-tadienyl}zirconium
Bis (dimethylamido) {η⁵:κP-1-(P-tolylphosphido)isopropylmethylidenindenyl}titan
Bis(diethylamido)(η⁵ : κP-1-(P-tolylphosphido)ethylindenyl)zirconium
Bis (diethylamido) {η⁵:κP-1-(P-phenylphospido)-ethylmethylidenindenyl}zirconium
Bis (diethylamido) {η⁵:κP-1-(P-tolylphosphido)*cyclohex*y*l*methylidenindenyl}-zirconium
Bis (diethylamido) {η⁵:κP-1-(P-*tert*butylphospido)cyclohexylmethylidenindenyl}-zirconium
Bis (dimethylamido) {η⁵:κP-1-(P-tolylphosphido)isopropylmethylidenbenzindenyl}titan
Bis(diethylamido)(η⁵: κP-1-(P-tolylphosphido)ethylidenbenzindenyl)zirconium
Bis(diethylamido){η⁵:κP-1-(P-phenylphospido)-ethylmethylidenbenzindenyl}zirconium
Bis (diethylamido) {η⁵:κP-1-(P-tolylphosphido)*cyclohexyl*methylidenbenzindenyl}-zirconium
Bis (diethylamido) {η⁵:κP-1- (P-tertbutylphospido) cyclohexylmethylidenbenzindenyl}-zirconium .
Bis(dimethylamido) {η⁵:κP-1-(P-tolylphosphido)isopropylmethylidenfluorenyl}titan
Bis (diethylamido) (η⁵ : κP-1-(P-tolylphosphido)ethylfluorenyl)zirconium
Bis(diethylamido){η⁵:κP-1-(P-phenylphospido)-ethylmethylidenfluorenyl}zirconium
Bis(diethylamido){η⁵:κP-1-(P-tolylphosphido)*cyclohexyl*methylidenfluorenyl}-zirconium
Bis (diethylamido) {η⁵:κP-1-(P-*tert*butylphospido)cyclohexylmethylidenfluorenyl}-zirconium
Bis (dimethylamido) {η⁵:κP-1-(P-tolylphosphido)isopropylmethylidenphenantryl}titan
Bis(diethylamido)(η⁵ : κP-1-(P-tolylphosphido)ethylidenphenantryl)zirconium
Bis (diethylamido) {η⁵:κP-1-(P-phenylphospido)-ethylmethylidenphenantryl}zirconium
Bis(diethylamido){η⁵:κP-1-(P-tolylphosphido)*cyclohexyl*methylidenphenantryl}-zirconium
Bis(diethylamido){η⁵:κP-1-(P-tertbutylphospido)cyclohexylmethylidenphenantryl}-zirconium

Die vorliegende Erfindung betrifft außerdem ein Katalysatorsystem welches die erfindungsgemäße chemische Verbindung der Formel VII-A enthält.

Die erfindungsgemäßen Metallkomplexe der Formeln VII-A eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallkomplex enthält.

Der Cokatalysator, der zusammen mit einem erfindungsgemäßen Übergangsmetallkomplex der Formeln VII-A das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (XI)

(R AlO)ₙ (XI)

verwendet.

Weitere geeignete Aluminoxane können z.B. cyclisch wie in Formel (XII) 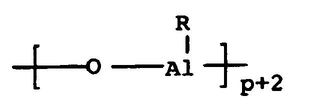 oder linear wie in Formel (XIII) 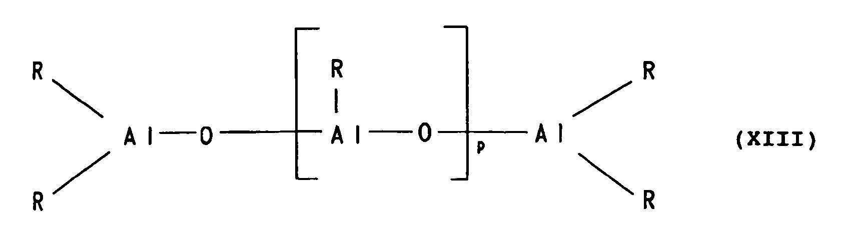 oder vom Cluster-Typ wie in Formel (XIV) 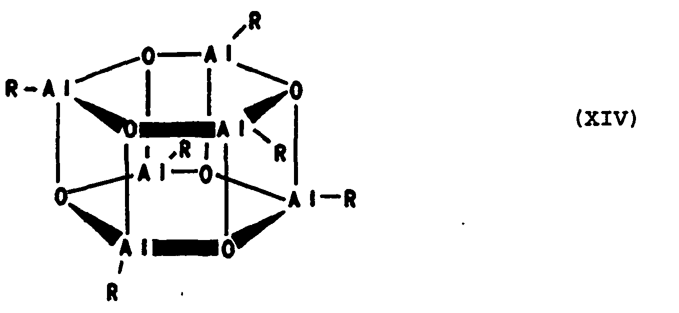 sein. Derartige Aluminoxane werden beispielsweise in JACS 117 (1995), 6465-74, Organometallics 13 (1994), 2957-2969, beschrieben.

Die Reste R in den Formeln (XI), (XII), (XIII) und (XIV) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,

Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆⁻, CF₃SO₃⁻ oder ClO₄⁻. Als kationische Gegenionen werden protonierte Lewis-Basen wie z.B. Methylamin, Anilin, N, N-Dimethylbenzylamin sowie Derivate, N, N-Dimethylcyclohexylamin sowie Derivate, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder Triphenylcarbenium eingesetzt.

Beispiele für solche ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra (pentafluorophenyl) borat,
Tributylammoniumtetra (pentafluorophenyl) aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
N, N-Dimethylcyclohexylammoniumtetrakis(pentafluorophenyl)borat
N, N-Dimethylbenzylammoniumtetrakis(pentafluorophenyl)borat
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat)cobaltate(III),
Tri(butyl)ammoniumbis(undecahydrid-7,8-dicarbaundecaborat)ferrat(III)
von Bedeutung.

Als Cokatalysatorsysteme sind ebenfalls Kombinationen aus mindestens einem der oben genannten Amine und einem Träger mit elementorganischen Verbindungen wie sie im Patent WO 99/40129 beschrieben sind, von Bedeutung.

Bevorzugte Bestandteil dieser Cokatalysatorsysteme sind die Verbindungen der Formeln (A) und (B), 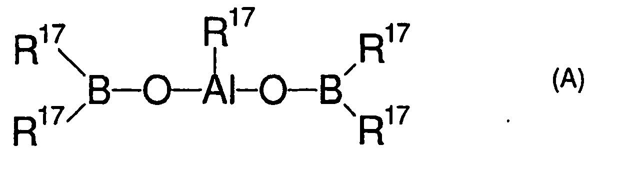 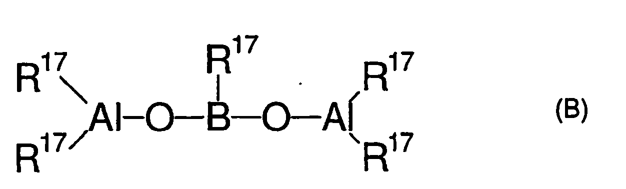 worin
- R¹⁷: ein Wasserstoffatom, ein Halogenatom, eine C₁-C₄₀-kohlenstoffhaltige Gruppe, insbesondere C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl oder C₇-C₄₀-Hslo₉snalkylaryl. R¹⁷ kann auch eine-OSiR₃-Gruppe sein, worin R gleich oder verschieden sind und die gleiche Bedeutung wie R¹⁷ haben.

Als weiterer bevorzugter Cokatalysator sind darüber hinaus allgemein Verbindungen anzusehen, die durch die Umsetzung mindestens einer Verbindung der Formel (C) und/oder (D) und/oder (E) mit mindestens einer Verbindung der Formel (F) entstehen.

R¹⁷ᵥB- (DR⁷⁰)ₛ (C)

R¹⁷₂B-X¹-BR¹⁷₂ (D)

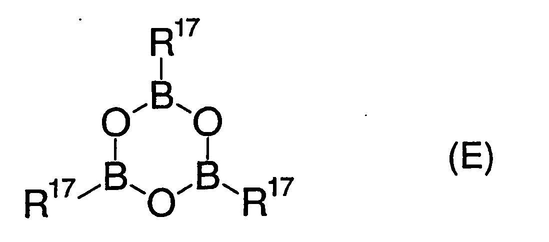

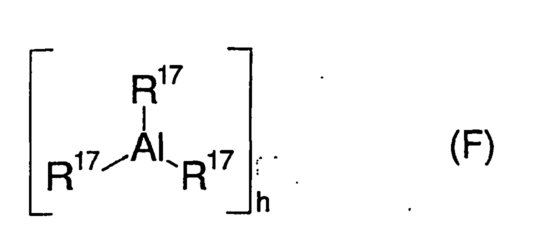

worin
- R⁷⁰: ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann und worin
- R¹⁷: die gleiche Bedeutung wie vorstehend genannte hat,
- X¹: ist gleich ein Element der 14. Gruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- D: ist gleich ein Element der 14. Gruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- v: eine ganze Zahl von 0 bis 3 ist
- s: eine ganze Zahl von 0 bis 3 ist,
- h: eine ganze Zahl von 1 bis 10 ist.

Gegebenenfalls werden die elementorganischen Verbindungen mit einer Organometallverbindung der Formel XI bis XIV und oder XV [M⁴⁰R¹⁹_{b}]_{d} kombiniert, worin M⁴⁰ ein Element der 1., 2. und 11. Gruppe des Periodensystems der Elemente ist, R¹⁹ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₄₀-Aryl-, C₇-C₄₀-Aryl-alkyl oder C₇-C₄₀-Alkyl-aryl-Gruppe bedeutet, b eine ganze Zahl von 1 bis 3 und d ist eine ganze Zahl von 1 bis 4 ist.

Beispiele für die cokatalytisch wirkenden Verbindungen der Formeln A und B sind

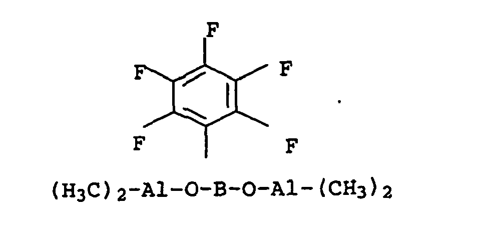

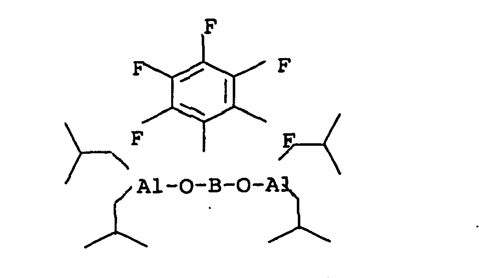

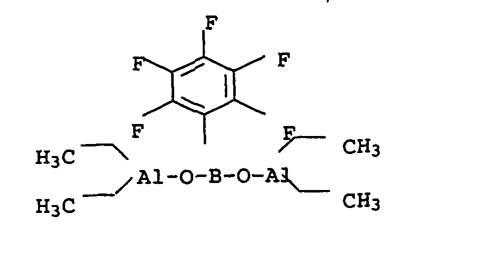

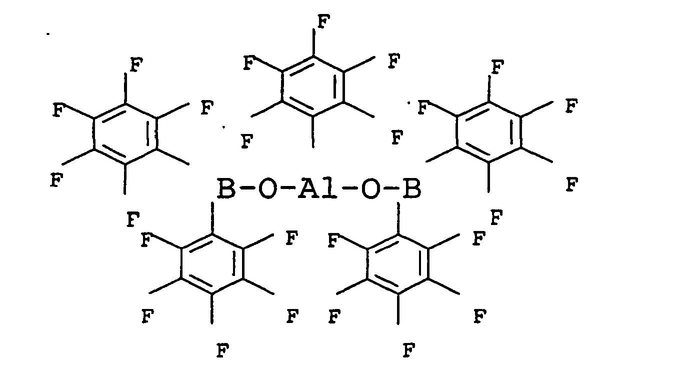

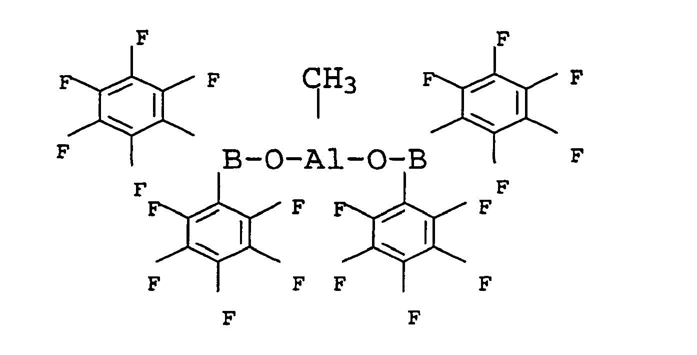

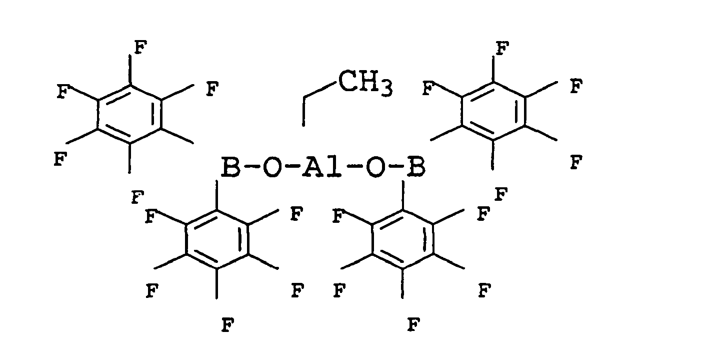

Bei den Organometallverbindungen der Formel XV handelt es sich vorzugsweise um neutrale Lewissäuren worin M⁴⁰ für Lithium, Magnesium und/oder Aluminium, insbesondere Aluminium, steht. Beispiele für die bevorzugten Organometall-Verbindungen der Formel XII sind Trimethylaluminium, Triethylaluminium, Tri-isopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesqui-chlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethyl-aluminium(triethylsiloxid), Phenylalan, Pentafluorphenylalan und o-Tolylalan.

Als weitere Cokatalysatoren, die ungeträgert oder geträgert vorliegen können, sind die in EP-A-924223, DE-A-19622207, EP-A-601830, EP-A-824112, EP-A-824113, EP-A-811627, WO97/11775 und DE-A-19606167 genannten Verbindungen zu verwenden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in der 2., 11., 12., 13., und 14. Gruppe des Periodensystems und der 3-9 Gruppe des Periodensystems der Elemente. Beispiele für als Träger bevorzugte Oxide umfassen Siliciumdioxid; Aluminiumoxid, sowie Mischoxide der Elemente Calcium, Aluminium, Silicium, Magnesium, Titan und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂, TiO₂ oder B₂O₃ , um nur einige zu nennen.

Die verwendeten Trägermaterialien weisen in der Regel eine spezifische Oberfläche im Bereich von 10 bis 1000 m²/g, ein Porenvolumen im Bereich von 0,1 bis 5 ml/g und eine mittlere Partikelgröße von 1 bis 500 ∝m auf. Bevorzugt sind Träger mit einer spezifischen Oberfläche im Bereich von 50 bis 500 ∝m , einem Porenvolumen im Bereich zwischen 0,5 und 3,5 ml/g und einer mittleren Partikelgröße im Bereich von 5 bis 350 ∝m. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 ∝m.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems wird mindestens eine der oben beschriebenen Übergangsmetallverbindung der Formel VII in einem geeigneten Lösemittel mit mindestens einer Cokatalysatorkomponente in Kontakt gebracht, wobei bevorzugt ein lösliches Reaktionsprodukt , ein Addukt oder ein Gemisch erhalten wird.

Die so erhaltene Zubereitung wird dann mit dem dehydratisierten oder inertisierten Trägermaterial vermischt, das Lösemittel entfernt und das resultierende geträgerte Übergangsmetallverbindung-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten Übergangsmetallverbindung Katalysatorsystems umfaßt die folgenden Schritte:
a) Herstellung einer Übergangsmetallverbindung /Cokatalysator-Mischung in einem geeigneten Löse- oder Suspensionsmittel, wobei die Übergangsmetallverbindung -Komponente eine der zuvor beschriebenen Strukturen besitzt.
b) Aufbringen der Übergangsmetallverbindung /Cokatalysatormischung auf einen porösen, bevorzugt anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Übergangsmetallverbindung /Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Übergangsmetallverbindung - und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Übergangsmetallverbindung können über einen weiten Bereich variiert werden. Bevorzugt wird ein molares Verhältnis von Aluminium zum Übergangsmetall in den Übergangsmetallverbindungen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird die Übergangsmetallverbindung in Form eines Feststoffes in einer Lösung des Aluminoxans in einem geeigneten Lösemittel aufgelöst. Es ist auch möglich, die Übergangsmetallverbindung getrennt in einem geeigneten Lösemittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Übergangsmetallverbindung /Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Übergangsmetallverbindung -Cokatalysator-Lösung bzw. das Übergangsmetallverbindung -Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Übergangsmetallverbindung -Cokatalysatorgemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. die Übergangsmetallverbindung-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist.

Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins bevorzugt eines α-Olefins (beispielsweise Vinylcyclohexan, Styrol oder Phenyldimethylvinylsilan) als modifizierende Komponente oder ein Antistatikum (wie in US Serial No. 08/365280 beschrieben) zugesetzt werden. Das molare Verhältnis von Additiv zu Metallocenkomponente Verbindung I beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine übergangsmetallkomponente der Formel VII-A. Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können.

Beispiele für solche Olefine sind 1-Olefine mit 2 - 20, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen. Bevorzugt werden in dem erfindungsgemäßen Verfahren Ethen oder Propen homopolymerisiert, oder Propen mit Ethen und/oder mit einem oder mehreren 1-Olefinen mit 4 bis 20 C-Atomen, wie Buten, Hexen, Styrol oder Vinylcyclohexan, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere, Ethen/Norbornen, Ethen/Styrol oder Ethen/Propen/1,4-Hexadien-Terpolymere.

Die Polymerisation wird in der Regel bei einer Temperatur von 0 bis 300 °C , bevorzugt 50 bis 200 °C, ganz besonders bevorzugt 50 - 80 °C durchgeführt. Der Druck beträgt im allgemeinen 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Das Katalysatorsystem kann dem Polymerisationssystem pur zugeführt werden oder zur besseren Dosierbarkeit mit inerten Komponenten wie Paraffinen, Ölen oder Wachsen versetzt werden. Bei der Polymerisation kann außerdem ein Antistatikum zusammen mit oder getrennt von dem eingesetzten Katalysatorsystem in das Polymerisationssystem eindosiert werden.

Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsyatem treten keine Beläge oder Verbackungen auf.

Die durch Einsatz des erfindungsgemäßen Katalysatorsystems erhaltenen Copolymere sind mit hoher Produktivität bei technisch relevanten Prozessparametern ohne Belagsbildung herstellbar. Sie ermöglichen so die Herstellung von Copolymeren mit hohem Comonomereneinbau und hoher Molmasse.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

### 1,2,3,4-Tetramethylfulven (1)

2.00 g (0.014 mol) Pentamethylcyclopentadienyllithium (6) und 3.50 g (0.013 mol) Chlortriphenylmethan werden bei 0°C in ein 1:1 Lösungsmittelgemisch aus 50.0 ml Toluol und 50 ml Tetrahydrofuran suspendiert. Die Lösung wird über Nacht bei 5°C gerührt, man erhält so eine leuchtend rote Reaktionsmischung. Die Suspension wird anschließend auf ca. 20.0 ml eingeengt und mit 75.0 ml Pentan versetzt, wobei das bei der Reaktion entstandene Lithiumchlorid ausfällt. Der Niederschlag wird abfiltriert und man erhält eine klare, leuchtend orange gefärbte Lösung. Zum Entfernen des bei der Reaktion entstandenen Triphenylmethans wird die Reaktionslösung auf die Hälfte des Volumens eingeengt und für 2 Tage bei -30°C gelagert. Das Triphenylmethan fällt dabei als farbloser, kristalliner Feststoff an, der durch abdekantieren der überstehenden Lösung vom 1,2,3,4-Tetramethylfulven (1) abgetrennt werden kann. Die Reste an Pentan und Tetrahydrofuran werden anschließend bei 0°C im Ölpumpenvakuum entfernt und man erhält eine toluolische Lösung des orange gefärbten Produktes. Aufgrund der Thermolabilität des Fulvens (1), wird auf eine vollständige Isolierung des Produktes verzichtet. Zur Bestimmung der Ausbeute bzw. Konzentration der sich in Lösung befindlichen Verbindung (1), werden im ¹H-NMR Spektrum das Methylgruppensignal des Toluols gegen die Signale der Methylgruppen des Tetramethylfulvens (1) integriert. Aus dem Verhältnis läßt sich der Massenanteil des gewünschten Fulvens (1) bestimmen.

Ausbeute: ca. 1.50 g (ca. 86 %)

### 6,6-Dimethylfulven (2)

15.0 ml (12.0 g, 0.21 mol) Aceton und 41.0 ml (0.50 mol) frisch destilliertes Cyclopentadien werden in 80.0 ml entgastem Methanol gelöst und 25.0 ml (0.30 mol) Pyrrolidin unter Eiskühlung zugetropft. Die deutlich exotherme Reaktion wird unter Eiskühlung gerührt. Zur Aufarbeitung wird mit 18.0 ml Eisessig (pH-Kontrolle) neutralisiert und je 50.0 ml Wasser und Diethylether zugegeben. Die Phasen werden voneinander getrennt, die wäßrige Phase dreimal mit je 50.0 ml Diethylether extrahiert, die vereinigten organischen Phasen erst mit 40.0 ml Wasser, dann mit 40.0 ml gesättigter Natriumchloridlösung gewaschen und über Magnesiumsulfat getrocknet. Die Reaktionslösung wird am Rotationsverdampfer auf etwa 50.0 ml Volumen eingeengt und dann unter Eiskühlung der restliche Ether an der Ölpumpe entfernt. Das Produkt wird als gelborangefarbene Flüssigkeit erhalten.
Ausbeute: 15.0 g (70%) (Lit.: 81 %)

### Lithiumcyclohexylphosphid (3)

60.0 ml (34.8 mmol) einer 0.58 molaren Cyclohexylphosphin-Lösung in Hexan werden in 100 ml Pentan gelöst und auf -78°C gekühlt. Zu dieser Lösung werden langsam unter rühren 21.8 ml (34.9 mmol) n-Butyllithiumlösung hinzu getropft. Das Reaktionsgemisch wird über Nacht auf Raumtemperatur erwärmt und anschließend das ausgefallene farblose Lithiumsalz auf einer Fritte isoliert. Das Produkt wird dreimal mit je 20 ml Pentan gewaschen und danach im Vakuum getrocknet.
Ausbeute: 3.71 g (87 %)

### (Cyclohexylphosphino)methyl)tetramethylcyclopentadienyllithium (4)

200 mg (2.20 mmol) Lithiumcyclohexylphosphid (3) werden in 50 ml gelöst und auf -78°C gekühlt. Anschließend werden 2.50 g eines 9:1 Gemisches aus Toluol und dem 1,2,3,4-Tetramethylfulven (1) hinzu getropft. Die Reaktionslösung wird danach über Nacht auf Raumtemperatur erwärmt, wobei das Produkt als weißer Niederschlag ausfällt. Das Monolithiumsalz (4) wird abfiltriert, zweimal mit je 10 ml Pentan gewaschen und zum Schluß im Vakuum getrocknet.
Ausbeute: 410 mg (83 %) 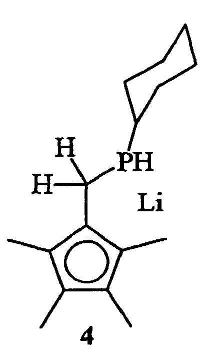 ¹H-NMR ([D₈] -Tetrahydrofuran, 200.1 MHz, 300 K): δ = 2.10-0.85 (m, 11H, Cyclohexyl-*H*), 1.84, 1.81 (je s, je 6H, Cp-C*H*₃), 1.72 (d, 2H, ³J_{HH}= 6.0 Hz, CH₂). Das PH-Proton wird nicht beobachtet.
³¹p-NMR ([D₈] -Tetrahydrofuran, 81.0 MHz, 300 K): δ = -41.2 (dm, 1J_{PH} = 192 Hz, *PH*).

### (1-Methyl-1-cyclohexylphosphinoethyl)cyclopentadienyllithium (5)

200 mg (2.20 mmol) Lithiumcyclohexylphosphid (3) werden in 50 ml gelöst und auf -78°C gekühlt. Anschließend werden 265 mg (2.50 mmol) 6, 6-Dimethylfulven (2) hinzu getropft. Die Reaktionslösung wird danach über Nacht auf Raumtemperatur erwärmt, wobei das Produkt als weißer Niederschlag ausfällt. Das Monolithiumsalz (5) wird abfiltriert, zweimal mit je 10 ml Pentan gewaschen und zum Schluß im Vakuum getrocknet.
Hinweis: Als Nebenreaktion wird zu ca. 20 % das Eliminierungsprodukt (6) gebildet. 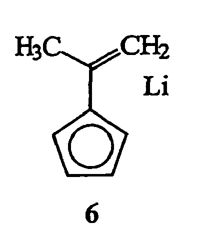 Auf eine mühsame Abtrennung des Nebenproduktes wird an dieser Stelle verzichtet, da bei den folgenden Stufen (zweite Deprotonierung, Ummetallieurng auf das Titan bzw. Zirkonium) die Verbindung (6) leichter entfernt werden kann. Für weitere Informationen siehe unten.
Ausbeute¹ : 357 mg (71 %)
¹ Die Ausbeute des Lithiumsalzes (5) wird mit Hilfe der ¹H-NMR Spektroskopie bestimmt. Siehe auch Hinweis 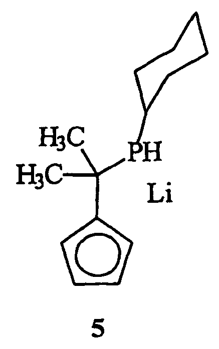 ¹H-NMR ([D₈]-Tetrahydrofuran, 200.1 MHz, 300 K) : δ = 5.62, 5.56 (je m, je 2H Cp-*H*), 3.00 (d, 1H, ¹J_{PH} = 197 Hz, P*H*), 1.50, 1.44 (je s, je 3H, C*H*₃), 1.73-0.81 (m, 11H, Cyclohexyl-*H*).
³¹P-NMR ([D₆]-Benzol/([D₈]-Tetrahydrofuran 4:1, 81.0 MHz, 300 K) : δ = 6.3 (dm, ¹J_{PH} = 197 Hz, P*H*) .
Bis(dialkylamido)(η⁵ : κP-1-Phosphidomethylcyclopentadienyl)-verbindungen von Titan und Zirconium
Allgemeine Arbeitsvorschrift zur Darstellung der Bis(diethylamido)(η⁵ : κP-1-Phosphidomethylcyclopentadienyl)verbindungen von Titan und zirconium

Eine THF-Lösung des [CpCP] Liganden wird bei 0 °C mit der äquimolaren Menge Lithiumdiisopropylamid, ebenfalls gelöst in THF, versetzt, 1 h gerührt und anschließend zu einer Lösung von Bis(dimethylamido)dichlorotitan bzw. Bis(diethylamido)dichlorozirconium-bis(tetrahydrofuran) in THF gegeben. Die Reaktionslösung wird 2 h gerührt, das Lösungsmittel im Vakuum entfernt und der ölige Rückstand in Pentan aufgenommen. Das ausgefallene Lithiumchlorid wird abfiltriert und das Filtrat im Vakuum getrocknet. Die Zirconiumverbindungen werden als helle rotbraune Öle, die Titanverbindung als dunkelrotes Öl isoliert.
Bis(dimethylamido)(η⁵ : κP-1-(P-Cyclohexylphosphido)-1-methylethylidencyclopenta-dienyl)titan

Da das eingesetzte 1-(P-Cyclohexyl)phosphino-1-methylethylidencyclopentadienyl-lithium gem. ¹H-NMR-Integration noch 20 % 1-Methylvinylcyclopentadienyllithium enthielt, wurden entsprechend geringere Mengen Lithiumdiisopropylamid (107 mg, 1 mmol) und Bis(dimethylamido)dichlorotitan (195 mg, 0.95 mmol) mit 250 mg des Gemisches der Lithiumsalze umgesetzt. Das 1-Methylvinylcyclopentadienyllithium reagierte dabei nicht und konnte mit dem Lithiumchlorid von der Pentansuspension des Produktes abgetrennt werden.
Ausbeute: 220 mg (0.62 mmol, 65 % bezogen auf eingesetztes Bis(dimethylamido)-dichlorotitan) 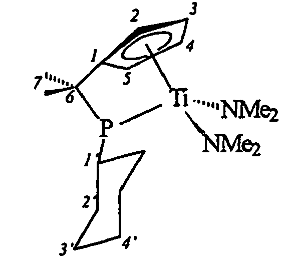 ¹H-NMR ([D₈]-Toluol, 599.8 MHz, 298 K): δ = 5.69 (m, 2H, 3-H u. 4-H), 5.18 (m, 2H, 2-H u. 5-H), 2.99 (s, 12H, NCH₃), 1.92 (m, 2H, 2'-H), 1.76 (m, 2H, 3'-H), 1.60 (m, 1H, 4'-H), 1.53 (d, ³J_{PH} = 10 Hz, 6H, 7-H), 1.40 (m, 2H, 2'-H), 1.26 (m, 2H, 3'-H), 1.22 (m, 1H, 4'-H), 1.21 (m, 1H, 1'-H).

GCOSY ([D₈]-Toluol, 599.8 MHz, 298 K) : δ¹H / δ¹H = 5.69 / 5.18 (Cp-H), 1.92 / 1.76, 1.40 (2'-H / 3'-H, 2'-H), 1.76 / 1.92, 1.60, 1.26 (3'-H / 2'-H, 4'-H, 3'-H), 1.60 / 1.76, 1.22 (4'-H / 3'-H, 4'-H), 1.40 / 1.92, 1.26, 1.21 (2'-H / 2'-H, 3'-H, 1'-H). ¹³C-NMR ([D₈]-Toluol, 150.8 MHz, 298 K) : δ = 120.0 (C-1), 110.9 (C-3 u. C-4), 107.2 (C-2 u. C-5), 46.6 (d, ³J_{PC} = 5.2 Hz, NCH₃), 36.7 (d, ¹J_{PC} = 38.3 Hz, C-1'), 34.9 (d, ²J_{PC} = 15.1 Hz, C-2'), 30.5 (C-6), 28.8 (d, ²J_{PC} = 14.6 Hz, C-7), 27.7 (d, ³J_{PC} = 9 .3 Hz, C-3'), 27.0 (C-4').

GHSQC-NMR ([D₈]-Toluol, 150.8 / 599.8 MHz, 298 K): δ = 110.9 / 5.69 (C-3 u. C-4 / 3-H u. 4-H), 107.2 / 5.18 (C-2 u. C-5 / 2-H u. 5-H), 46.6 /2.99 (NCH₃), 36.7 / 1.22 (C-1' / 1'-H), 34.9 / 1.92, 1.40 (C-2' /2'-H), 28.8 / 1.53 (C-7 / 7-H), 27.7 / 1.76, 1.26 (C-3' / 3'-H), 27.0 / 1.60, 1.22 (C-4' / 4'-H).
GHMBC-NMR ([D₈]-Toluol, 150.8 / 599.8 MHz, 298 K): δ = 120.0, 30.5 / 1.53 (C-1, C-6 / 7-H) . 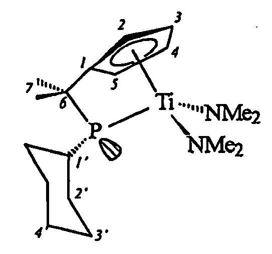 ¹H-NMR ([D₈]-Toluol, 599.8 MHz, 193 K): δ = 5.78, 5.61 (b, je 2H, 3-H u. 4-H), 5.33, 4.89 (b, je 2H, 2-H u. 5-H), 3.06, 2.88 (s, je 12H, NCH₃), 2.16 (m, 1H, 1'-H), 2.12 (m, 4H, 2'-H), 1.96 (m, 4H, 3'-H), 1.81 (m, 2H, 4'-H), 1.70 (b, 6H, 7-H), 1.59 (b, 6H, 7-H), 1.46 (m, 4H, 2'-H), 1.35 (m, 4H, 3'-H), 1.28 (m, 2H, 4'-H). 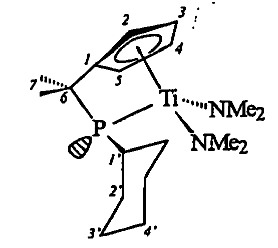 ¹³C-NMR ([D₈]-Toluol, 150.8 MHz, 193 K) : δ = 120.7 (C-1), 111.2, 110.7 (C-3 u. C.4), 108.8, 104.3 (C-2 u. C-5), 47.3, 45.0 (b, NCH₃), 38.5 (C-1'), 31.9 (C-7), 31.2 (C-2'), 28.3 (C-3'), 26.4 (C-4'), 24.4 (C-7), 22.2 (C-6). GHSQC-NMR ([D₈]-Toluol, 150.8 / 599.8 MHz, 193 K) : δ = 111.2 / 5.61 (C-3 o. C-4 / 3-H o. 4-H),
110.7 / 5.78 (C-3 o. C-4 / 3-H o. 4-H), 108.8 / 4.89 (C-2 o. C-5 / 2-H o. 5-H), 104.3 / 5.33 (C-2 o. C-5 / 2-H o. 5-H), 47.3 / 2.88 (NCH₃), 45.0 / 3.06 (NCH₃), 38.9 / 2.16 (C-1' / 1'-H), 31.9 / 1.70 (C-7 / 7-H), 31.2 / 2.12, 1.46 (C-2' / 2'-H), 28.3 / 1.96, 1.35 (C-3' / 3'-H), 26.4 / 1.81, 1.28 (C-4' / 4'-H), 24.4 / 1.59 (C-7 / 7-H) .
GHMBC-NMR ([D₈] -Toluol, 150.8 / 599.8 MHz, 193 K) : δ = 120.7 / 1.70, 1.59 (C-1, 7-H), 22.2 / 1.70 (C-6, 7-H).
31p-NMR ([D₈) -Toluol, 81.0 MHz) : δ = 14.2 (298 K), 6.3 (273 K), 0.6 (253 K), -5.5 (233 K), -11.4 (213 K), -17.2 (193 K).

Ergebnis der dynamischen ¹H-NMR-Spektroskopie ([D₈]-Toluol, 599.8 MHz) : Δν der Cp-Resonanzen (T = 193 K) = 93 Hz (5.78/5.61) bzw. 272 Hz (5.33/4.89).
Koaleszenztemperatur T_{c} = 213 K bzw. 228 K.
ΔG^{≠} = 9.8 kcal mol⁻¹ bzw. 10.0 kcal mol⁻¹

| Elementaranalyse: | | | |
|---|---|---|---|
| berechnet: | C: 60.67 % | H: 9.33 % | N: 7.86 % |
| gefunden: | C: 61.98 % | H: 9.15 % | N: 5.53 % |

Bis(diethylamido)(η⁵ : κP-1-(P-Cyclohexylphosphido)-1-methylethylidencyclopenta-dienyl)zirconium

Analog zur Synthese der Titanverbindung werden unter Berücksichtigung der Verunreinigung des Lithiumsalzes 250 mg des Gemisches mit 107 mg Lithiumdiisopropylamid (1 mmol) und 430 mg Bis(diethylamido)dichloro-zirconiumbis(tetrahydrofuran) (0.95 mmol) zur Reaktion gebracht. Das Produkt wird als rotes Ö1 erhalten.
Ausbeute: 312 mg (0.67 mmol, 72 % bezogen auf eingesetztes Bis(diethylamido)dichlorozirconiumbis(tetrahydrofuran)) 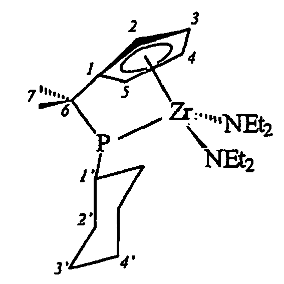 ¹H-NMR ([D₈]-Toluol, 599.8 MHz, 298 K): δ = 5.92 (m, 2H, 3-H u. 4-H), 5.47 (m, 2H, 2-H u. 5-H), 3.26, 3.15 (m, je 4H, NCH₂), 1.99 (m, 2H, 2'-H), 1.76 (m, 2H, 3'-H), 1.62 (d, ³J_{PH}= 10 Hz, 6H, 7-H), 1.60 (m, 1H, 1'-H), 1.58 (m, 1H, 4'-H), 1.47 (m, 2H, 2'-H), 1.26 (m, 2H, 3'-H), 1.23 (m, 1H, 4'-H), 0.93 (t, 3J = 6.0 Hz, 6H, NCH₂C*H*₃).
GCOSYC[D₈]-Toluol, 599.8 MHz, 298 K) : δ¹H / δ¹H = 5.92 / 5.47 (Cp-H),
¹³C-NMR ([D₈]-Toluol, 150.8 MHz, 298 K): 124.0 (C-1), 108.1 (C-3 u. C-4), 106.4 (d, ³J_{PC} = 3.6 Hz, C-2 u. C-5), 42.5 (d, ³J_{PC} < 2 Hz, NCH₂), 36.0 (d, 2J_{PC} = 16 Hz, C-2'), 35.6 (d, ¹J_{PC} = 38 Hz, C-1'), 33.2 (C-6), 30.9 (d, ²J_{PC} = 13 Hz, C-7), 27.6 (d, ³J_{PC} = 11 Hz, C-3'), 26.9 (C-4'), 16.1 (NCH₂C*H*₃).

GHSQC-NMR ([D₈]-Toluol, 150.8 / 599.8 MHz, 298 K): δ = 108.1 / 5.92 (C-3 u. C-4 / 3-H u. 4-H), 106.4 / 5.47 (C-2 u. C-5 / 2-H u. 5-H), 42.5 / 3.26, 3.15 (NCH₂), 36.0 / 1.99, 1.47 (C-2' / 2'-H), 35.6 / 1.60 (C-1' / 1'-H), 30.9 / 1.62 (C-7 / 7-H), 27.6 / 1.76, 1.26 (C-3' / 3'-H), 26.9 / 1.58, 1.23 (C-4' / 4'-H), 0.93 (NCH₂C*H*₃ / NCH₂CH₃).
GHMBC-NMR ([D₈]-Toluol, 150.8 / 599.8 MHz, 298 K): δ = 124.0, 33.5 / 1.62 (C-1, C-6 / 7-H).
³¹P-NMR ([D₈]-Toluol, 81.0 MHz) : δ = -11.5 (298 K), -14.5 (273 K), -16.9 (253 K), -19.1 (233 K), -21.5 (213 K), -24.2 (193 K).

| Elementaranalyse: | | | |
|---|---|---|---|
| berechnet: | C: 57.98 % | H: 9.07 % | N: 6.15 % |
| gefunden: | C: 58.27 % | H: 8.61 % | N: 4.91 % |

Bis(diethylamido)(η⁵ : κP-1-(P-Cyclohexylphosphido)methyliden-2,3,4,5-tetramethyl-cyclopentadienyl)zirconium

257 mg (1 mmol) 1-(P-Cyclohexyl)phosphinomethyl-2,3,4,5-tetramethylcyclopenta-dienyllithium werden mit 107 mg Lithiumdiisopropylamid (1 mmol) und 430 mg Bis(diethylamido)dichlorozirconium-bis(tetrahydrofuran) (0.95 mmol) zu einem rotbraunen Ö1 umgesetzt.
Ausbeute: 245 mg (71 mmol, 75 % bezogen auf eingesetztes Bis(diethylamido)dichlorozirconiumbis(tetrahydrofuran)). 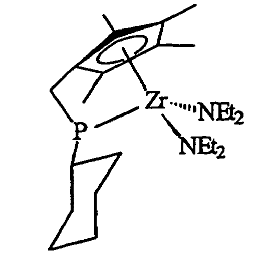 ¹H-NMR ([D₆]-Benzol, 200.13 MHz): δ = 3.47-3.22 (m, 8H, NCH₂), 2.22-1.02 (m, 11H, C₆H₁₁), 1.99 (s, 6H, CH₃), 1.97 (s, 6H, CH₃), 1.06 (t, ³J = 6.6 Hz, 12H, NCH₂C*H*₃) .
³¹P-NMR ([D₆]-Benzol, 81.0 MHz): δ = -106.4.
Homopolymerisation von Norbornen

20 mg Katalysator werden zu einer auf 80°C temperierten Lösung von 1.75 g Norbornen in 30 ml einer 10%igen MAO-Lösung gegeben und 20 h gerührt. Anschließend wird mit 20 ml MeOH/1N HCl 1:1 hydrolisiert, mit halbkonzentrierter HCl gerührt und das Polymer filtriert, gewaschen und getrocknet.

| Katalysator | Umsetzung Norbornen[%] | Schmelzpunkt[°C] |
|---|---|---|
| 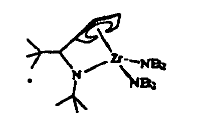 | 70 | 85 |
| 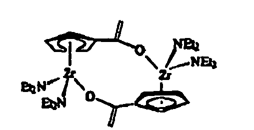 | 100 | 59 |
| 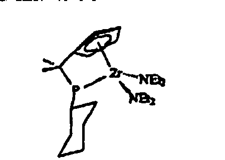 | 100 | 63 |

### Polymerisattion von Ethen

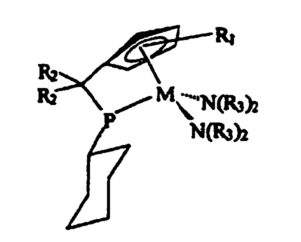

| R1 | R2 | R3 | M | cat[mg] | t[h] | p[bar] | T[°C] | PE[g] | Schmp.[°C] | Act.* |
|---|---|---|---|---|---|---|---|---|---|---|
| H | Me | Me | Ti | 21 | 1 | 2 | 60 | 13.5 | 132 | 114 |
| H | Me | Et | Zr | 21 | 0.25 | 2 | 60 | 21.0 | 128 | 910 |
| Me | H | Et | Zr | 21 | 1 | 2 | 60 | 9.5 | 126 | 109 |
| ** | | | | 20 | 1 | 2 | 60 | 4.9 | 114 | 52 |
| | | | | | | | | | | |

| | | | | | | | | | | |
|---|---|---|---|---|---|---|---|---|---|---|
| *[g(PE)/mmol cat*h*bar] **[(Me₄Cp)-SiMe₂-NtBu]Zr(NMe₂)₂ /// Bemerkung:Bei der angeg. Reaktionstemperatur werden 200ml Toluol und 20 ml MAO bei 2 bar Ethendruck 1h gesättigt. | | | | | | | | | | |

### Copolymerisationen Ethylen/1-Octen

| R1 | R2 | R4 | M | cat [mg] | Smp. [°C] | t [h] | p [bar] | T [°C] | Copo [g] | Ethen:O cten | Act.* |
|---|---|---|---|---|---|---|---|---|---|---|---|
| H | Me | Me | Ti | 16 | Oel | ½ | 1 | 90 | 0.5 | 5:1 | 22 |
| H | Me | Et | Zr | 21 | Festes Oel | ½ | 1 | 90 | 51.5 | 6:1 | 2237 |
| Me | H | Et | Zr | 23 | " | ½ | 1 | 90 | 5.8 | 7.5:1 | 244 |
| H | Me | Et | Zr | 22 | " | 1 | 1 | 90 | 67.7 | 6:1 | 1470 |
| Me | H | Et | Zr | 20 | " | 1 | 1 | 90 | 7.1 | 7:1 | 172 |
| ** | | | | 20 | Oel | ½ | 1 | 90 | 10.3 | 3:1 | 420 |
| | | | | | | | | | | | |

| | | | | | | | | | | | |
|---|---|---|---|---|---|---|---|---|---|---|---|
| *[g(PE)/mmol cat*h*bar] **[(Me₄Cp)-SiMe₂-NtBu]Zr(NMe₂)₂ /// Bemerkung:Bei der angeg. Reaktionstemperatur werden 20 ml MAO und 60ml Toluol/20 ml Octen bzw. 30 ml Toluol/50 ml Octen beim angegeben Ethendruck 1h gesättigt. % Octenlsg = 50 | | | | | | | | | | | |

Allgemeine Arbeitsvorschrift zur Darstellung von Aminoalkylcyclopentadienyl-lithiumverbindungen durch Addition eines Lithiumamids an ein Fulven (Vergleichsbeispiele).

Zu einer Lösung von Lithiumdiisopropylamid in THF wird die äquimolare Menge des entsprechenden Amines gegeben und zwei Stunden gerührt. Das *in situ* generierte Amid wird dann mit der äquimolaren Menge eines Fulvens versetzt. Die Reaktionslösung wird über Nacht gerührt und anschließend im Vakuum vom Lösungsmittel befreit. Der ölige Rückstand wird mehrfach in Pentan aufgenommen und wieder im Vakuum getrocknet, das Produkt behält im Falle der N-Alkylderivate aber seine ölige Konsistenz.

### (1-N-p-Tolyllamino-2,2-dimethyl)propylcyclopentadienyllithium

800 mg LDA (7.46 mmol) und 800 mg (7.46 mmol) 4-Methylanilin generieren *in situ* Lithium-4-methylanilid, das mit 1g (7.46 mmol) *tert*Butylfulven nach oben beschriebener Aufarbeitung zu 2.12 g (7.00 mmol, 89 %) Produkt reagiert. Das hellbaune Pulver enthält ein Äquivalent THF. 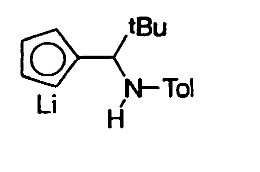 1H-NMR ([D₈]-THF, 200.13 MHz) δ = 6.90 (d, 2H, Tol-H), 6.56 (b, 2H, Tol-H), 5.68 (b, 4H, Cp-H), 4.09 (b, 1H, CH), 2.23 (s, 3H, Tol-*CH*₃), 1.02 (s, 9H, C(C*H*₃)₃).

### (1-N-tertButyllamino-2,2-dimethyl)propylcyclopentadienyllithium

Lithiumtertbutylamid wird *in situ* durch Reaktion von 545 mg (7.46 mmol) *tert*Butylamin mit 800 mg (7.46 mmol) LDA erzeugt und anschließend mit 1 g (7.46 mmol) *tert*Butylfulven versetzt. Das Produkt wird mit 91 % Ausbeute (1.44 g, 6.79 mmol) als braunes Öl isoliert. 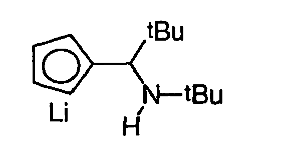 1H-NMR ([D₈]-THF, 200.13 MHz) δ = 5. 56 (m, 2H, Cp-H), 5.52 (m, 2H, Cp-H), 3.18 (d, 3J = 7.0 Hz, 1H, CH), 0.95 (s, 9H, C(C*H*₃)₃), 0.83 (s, 9H, C (C*H*₃)₃).
13C-NMR ([D₈] -THF, 50.3 MHz): δ = 125.4 (ipso-Cp), 103.1 (Cp), 101.1 (Cp), 63.1 (C-1), 30.5 (*C*(CH₃)₃), 27.9 (C(*C*H₃)₃).

### 1-TertButyllaminomethyl-2,3,4,5-tetramethylcyclopentadienyllithium

200 mg (2.53 mmol) Lithiumtertbutylamid werden in 50 ml Pentan und 2 ml THF gelöst und mit 2.5 g eines 9:1 Gemisches von Toluol und 2,3,4,5-Tetramethylfulven versetzt. Die Reaktionslösung wird über Nacht gerührt, wobei das Produkt ausfällt. Das Lösungsmittel wird im Vakuum entfernt, der Rückstand in reinem Pentan aufgenommen und auf einer Fritte gesammelt. Nach zweifachen Waschen mit jeweils 20 ml Pentan wird das weiße, pulverförmige Produkt im Vakuum getrocknet. 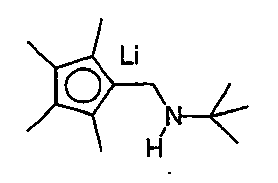 1H-NMR ([D₈]-THF, 200.13 MHz) δ = 4.37 (d, 3J = 7.0 Hz, 2H, CH), 1.86 (s, 6H, Cp-C*H*₃), 1.82 (s, 6H, Cp-C*H*₃), 1.19 (s, 9H, C(C*H*₃)₃).
13C-NMR ([D₈]-THF, 50.3 MHz): δ = 111.0 (*ipso*-Cp), 107.3 (Cp), 107.2 (Cp), 50.6 (*C*(CH₃)₃), 38.5 (CH₂), 29.7 (C(*C*H₃)₃), 10.8 (Cp-*C*H₃), 10.6 (Cp-*C*H₃).

### 6-(N-Arylamido)fulvenyllithiumverbindungen

### Allgemeine Arbeitsvorschrift zur Darstellung von 6-(N-Arylamido)fulvenyl-lithiumverbindungen (Beispiele)

Eine Lösung des 6-(Dimethylamino)fulvens oder des 6-(Dimethylamino)-1,2,3,4-tetramethylfulvens in Tetrahydrofuran wird mit der äquimolaren Menge des Lithiumanilids, ebenfalls gelöst in Tetrahydrofuran, bei Raumtemperatur versetzt und anschließend gerührt. Die Reaktionszeit beträgt in Abhängigkeit von den Substituenten am Cyclopentadienyl- und am Phenylring 2-48 h. Nach vollständiger Umsetzung wird das Lösungsmittel und das gebildete Dimethylamin im Vakuum entfernt, das entstehende zähe Öl mehrmals zunächst mit Pentan überschichtet und anschließend wieder im Vakuum vom Lösungsmittel befreit. Die Suspension wird dann filtriert und der Rückstand im Vakuum getrocknet. Die Lithiumsalze fallen in hohen Ausbeuten (>80 %) als hellbraune Pulver an.

### 6-(N-Phenylamido)fulvenyllithium-tetrahydrofuranat

Die Umsetzung von 3 g (25 mmol) 6-(Dimethylamino)fulven mit 2.45 g (25 mmol) Lithiumanilid ergibt nach 2 h Reaktionszeit und anschließender Aufarbeitung 5.55 g (22.4 mmol) (91 %) 6-N-Phenylamidofulvenyllithium-THF-Addukt. Aus einer konzentrierten THF-Lösung konnten bei -20 °C nadelförmige farblose Kristalle gezüchtet werden, die sich für eine Röntgenstrukturanalyse eigneten. 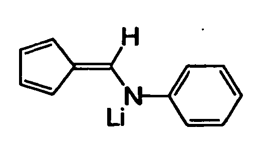 1H-NMR ([D₆)-Benzol, 200.13 MHz): δ = 8.19 (s, 1H, 6-H), 7.16 (t, m-Ph-H, 2H), 7.00 (d, o-Ph-H, 2H), 6.95 (t, p-Ph-H, 1H), 3.43 (m, α-H-thf, 4H), 1.19 (m, β-H-thf, 2H).
13C-NMR ([D_{6]}-Benzol, 50.3 MHz): δ = 158.5 (C-6), 55.5 (ipso-Ph), 129.1, 121.9, 121.2 (alle Ph), 120.7 (ipso-Cp), 114.4, 112.8 (beide Cp).
7Li-NMR ([D₈]-THF, 70 MHz): δ = - 0.89.

### N-Phenylamido-2,3,4,5-tetramethylfulvenyllithium

Die Umsetzung von 2 g (11 mmol) 6-Dimethylamino-2,3,4,5-tetramethylfulven mit 1.12 g (11 mmol) Lithiumanilid ergibt nach 24 h Reaktionszeit und anschließender Aufarbeitung 2.16 g (9.4 mmol) (85 %) N-Phenylamido-2,3,4,5-tetramethylfulvenyllithium. 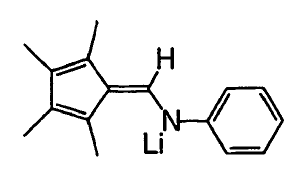 1H-NMR ([D₈] -THF, 200.13 MHz): δ = 8.13 (s, 1H); 7.11 (t, m-Ph-H, 2H); 6.89 (d, o-Ph-H, 2H); 6.71 (t, p-Ph-H, 1H) 2.26 (s, 6H) ; 1.99 (s, 6H).

### 6-[N-(2,6-diisopropylphenyl)amido]fulvenyllithium-tetrahydrofuranat

3 g (25 mmol) 6-(Dimethylamino)fulven werden mit 4.52 g (25 mmol) Lithium-2,6-(diisopropyl)anilid umgesetzt. Die Aufarbeitung nach 48 h Reaktionszeit ergibt 6.62 g (20 mmol) (81 %) 6-N-(2',6'-diisopropylphenyl)amidofulvenyllithium-THF-Addukt. Durch Abkühlen einer konzentrierten Tetrahydrofuranlösung auf-20 °C konnten gelbe Einkristalle erhalten werden, die sich für eine Röntgenstrukturanalyse eigneten. 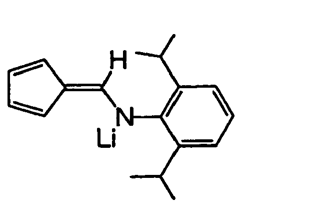 1H-NMR ([D₆]-Benzol, 200.13 MHz) : δ = 8.07 (s, 1H, 1-H), 7.20 - 7.05 (m, Ph-H, 3H), 6.66 (m, Cp-H, 2H), 6.44 (m, Cp-H, 2H), 3.53 (m, α-H-thf, 4H), 3.42 (sept., 3J= 7.0 Hz, 2H, C*H*(CH₃)₂)), 1.44 (m, β-H-thf, 4H), 1.19 (d, 3J = 7.0 Hz, 12H, CH(*CH₃*)₂)).
13C-NMR ([D₆]-Benzol, 50.3 MHz) : δ = 165.5 (C-6), 140.9 (ipso-Ph), 125.3 (p-Ph), 124.8 (o-Ph), 123.9 (ipso-Cp), 123.6 (m-Ph) 112.2 (Cp); 43.0 (*C*H(CH₃)₂), 25.4 (CH(*C*H₃)₂.

### Amidomethylcyclopentadienyldilithiumverbindungen

### a) durch Addition an ein Amidofulvenyllithium (Beispiele)

### 1-(N-Phenylamido)ethylcyclopentadienyldilithium

3 g (12.1 mmol) 6-(N-Phenylamido)fulvenyllithium-tetrahydrofuranat werden in 50 ml Diethylether suspendiert und tropfenweise mit 7.4 ml einer 1.63 M Methyllithiumlösung in Diethylether versetzt. Die Reaktionslösung wird 12 h gerührt und anschließend vom Lösungsmittel befreit. Das Produkt wird als braunes Pulver isoliert und enthält noch 0.75 Äquivalente THF. Die Ausbeute beträgt 2.93 g (11.6 mmol, 96 %). 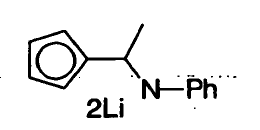 1H-NMR ([D₈]-THF, 200.1 MHz): δ = 6.69 (t, 3J_{H-H} = 7.2 Hz, 2H, m-Ph-H), 6.29 (d, 3J_{H-H} = 7.2 Hz, 2H, o-Ph-H), 5.80 (t, 3J_{H-H} = 7.1 Hz, 1H, p-Ph-H), 5.66 (b, 4H, Cp-H), 4.25 (q, 3J_{H-H} = 6.0 Hz, 1H, H-1), 1.26 (d, 3J_{H-H} = 6.0 Hz, 3H, H-2) ppm.

### [(N-Phenylamido)-p-Tolyl]methylcyclopentadienyldilithium

988 mg (4 mmol) 6-(N-Phenylamido)fulvenyllithium-tetrahydrofuranat, gelöst in 50 ml THF, werden mit einer Lösung von 392 mg (4mmol) p-Tolyllithium in 30 ml THF versetzt. Die braune Lösung wird über Nacht gerührt, anschließend wird das Lösungsmittel im Vakuum entfernt. Der Rückstand wird zweimal in Pentan aufgenommen und wieder zur Trockne gebracht, so daß schließlich 1.03 g (3.76 mmol, 94 %) des braunen, pulverförmigen Produktes isoliert werden können. 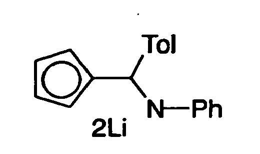 1H-NMR ([D₈]-THF, 200.1 MHz): δ = 7.25 (d, 3J_{H-H} = 7.4 Hz, 2H, Tol-H), 6.88 (d, 3J_{H-H} = 7.4 Hz, 2H, Tol-H); 5.80 (t, 3J_{H-H} = 8.0 Hz, 2H, m-Ph-H); 6.20 - 5.80 (b, 3H, o- u. p-Ph-H), 5.67 (m, 2H, Cp-H); 5.53 (b, 2H, Cp-H), 5.12 (s, 1H, H-1); 2.22 (s, 3H, Tol-C*H*₃) .

### b) durch Deprotonierung eines Aminomethylcyclopentadienyllithiumsalzes (Vergleichsbeispiele)

### (1-N-p-Tolyllamido-2,2-dimethyl)propylcyclopentadienyldilithium

2.12 g (7.00 mmol) (1-N-*p*-Tolyllamino-2,2-dimethyl)propylcyclopentadienyllithium _{*}THF werden in 50 ml THF gelöst und mit 756 mg (7.00 mmol) LDA, ebenfalls gelöst in 30 ml THF, bei 0°C versetzt. Nach 3 h Reaktionszeit wird das Lösungsmittel im Vakuum entfernt und das Produkt durch mehrfaches Überschichten mit Pentan und jeweils anschließendes Trocknen im Vakuum pulverisiert. Die Ausbeute beträgt 1.34 g (87 %, 6.1 mmol). 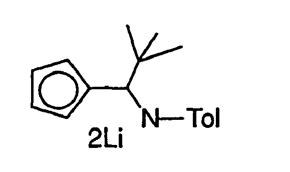 1H-NMR ([D₈]-THF, 200.1 MHz): δ = 6.38 (d, 3J_{H-H} = 8.0 Hz, 2H, Tol-H), 6.05 (b, 2H, Tol-H), 5.63 (b, 4H, Cp-H), 4.05 (s, 1H, H-1), 2.01 (s, 3H, Tol-C*H*₃), 0.98 (s, 9H, C(C*H*₃)₃).

### (1-N-tertButyllamido-2,2-dimethyl)propylcyclopentadienyldilithium

1.2 g (5.64 mmol) (1-N-*tert*Butyllamino-2,2-dimethyl)propylcyclopentadienyllithium werden in 30 ml THF gelöst und bei -78 °C mit 3.7 ml einer 1.52 M *tert*Butyllithiumlösung in Hexan versetzt. Die Reaktionslösung wird über Nacht gerührt und dann vom Lösungsmittel befreit. Der ölige Rückstand wird in Pentan aufgerührt und das ausfallende hellgelbe Pulver auf einer Fritte gesammelt und im Vakuum getrocknet. Man erhält das Produkt nahezu quantitativ in 98 % (1.21 g, 5.53 mmol) Ausbeute. 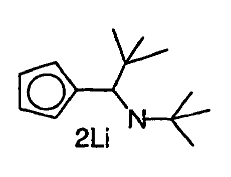 1H-NMR ([D₈]-THF, 200.13 MHz) δ = 5.7-5.5 (b, 4H, Cp-H), 3.29 (s, 1H, 1-H), 1.13 (s, 9H, C(C*H*₃)₃), 0.95 (s, 9H, C(*CH*₃)₃).

### 1-TertButyllaminomethyl-2,3,4,5-tetramethylcyclopentadienyldilithium

200 mg (0.98 mmol) *Tert*Butyllaminomethyl-2,3,4,5-tetramethylcyclopentadienyl-lithium werden in 50 ml THF gelöst und bei -78 °C langsam mit 0.63 ml einer 1.56 M *tert*Butyllithiumlösung in Hexan versetzt. Die Reaktionslösung wird über Nacht gerührt, der Niederschlag abfiltriert, mit 10 ml Pentan gewaschen und im Vakuum getrocknet. Man erhält 188 mg (0.88 mmol, 90%) des Produktes als weißes Pulver, das auch in keinem der verwendeten Lösungsmittel löslich ist und sich somit auch nicht NMR-spektroskopisch charakterisieren ließ. 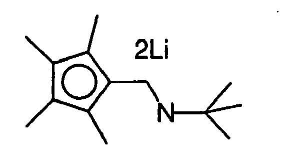 Bis(diethylamido)(η⁵: κN-1-Amidomethylcyclopentadienyl)-verbindungen von Titan und Zirconium

### Allgemeine Arbeitsvorschrift zur Darstellung der Bis(diethylamido)(η⁵ : κN-1 Amidomethylcyclopentadienyl)verbindungen von Titan und Zirconium

Eine THF-Lösung des dianionischen [Cp,N] Liganden wird bei 0 °C zu einer Lösung von Bis(dimethylamido)dichlorotitan bzw. Bis(diethylamido)dichlorozirconiumbis-(tetrahydrofuran) in THF gegeben. Die Reaktionslösung wird 2 h gerührt, das Lösungsmittel im Vakuum entfernt und der ölige Rückstand in Pentan aufgenommen. Das ausgefallene Lithiumchlorid wird abfiltriert und das Filtrat im Vakuum getrocknet. Das Produkt fällt als bei allen Zirconiumverbindungen als gelbbraunes Öl an, lediglich die Titanverbindung wird als dunkelrotes Pulver isoliert.

### Bis(dimethylamido) {η⁵:κN-1-(N-phenylamido)tertbutylmethylcyclopenta-dienyl}titan

231 mg (1.12 mmol) Bis(dimethylamido)dichlorotitan und 370 mg (1.12 mmol) (1-N-*p*-Tolyllamido-2,2-dimethyl)propylcyclopentadienyldilithium ergeben 276 mg (0.80 mmol, 71 %) Produkt in Form eines dunkelroten Pulvers. 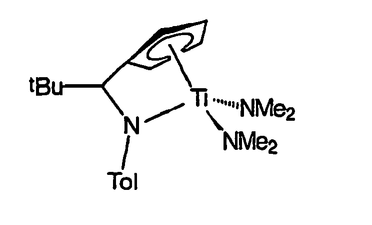 1H-NMR ([D₆]-Benzol, 599.8 MHz) : δ = 7.02 (d, 3J = 6.6 Hz, 2H, m-Tol-H), 6.99 (t, 3J = 6.6 Hz, 2H, o-Tol-H), 6.16, 5.73 (m, je 1H, 1'-H), 6.12, 5.83 (m, je 1H, 2'-H), 4.85 (s, 1H, 1-H), 3.02, 2.87 (s, je 6H, NCH₃), 2.19 (s, 3H, Tol-CH₃), 1.14 (s, 9H, 3-H).

GCOSY([D₆]-Benzol, 599.8 MHz) : δ¹H / δ¹H = 7.02 / 6.99 (m- / o-Tol-H), 6.99 / 7.02 (o- /m-Tol-H), 6.16 / 6.12, 5.83, 5.73 (Cp-H).
13C-NMR ([D₆]-Benzol, 150.8 MHz): 154.0 (ipso-Tol), 129.1 (m-Tol), 128.5 (p-Tol), 119.2 (o-Tol), 116.7 (C-1'), 114.8 (C-1'), 114.8 (ipso-Cp), 114.7 (C-2'), 111.3 (C-2'), 68.1 (C-1), 48.9, 47.0 (beide NCH₃), 38.0 (C-2), 28.6 (C-3), 20.8 (Tol-CH₃).

GHSQC-NMR ([D₆]-Benzol, 150.8 / 599.8 MHz) : δ = 129.1 / 7.02 (m-Tol-C / m-Tol-H), 119.2 /6.99 (o-Tol-C / o-Tol-H), 116.7 / 5.73 (C-1' / 1'-H), 114.8 /6.16 (C-1' / 1'-H), 114.7 / 6.12 (C-2' / 2'-H), 111.3 / 5.83 (C-2' / 2'-H), 68.1 / 4.85 (C-1 / 1-H), 48.9 /2.87 (NCH₃), 47.0 / 3.02 (NCH₃), 28.8 / 1.14 (C-3 / 3-H), 20.8 / 2.19 (Tol-CH₃ / Tol-CH₃).

### Bis(diethylamido)(η⁵ : κN-1-(N-Phenylamido)ethylcyclopentadienyl)zirconium

Die Reaktion von 2.5 g (5.6 mmol) Bis(diethylamido)dichlorozirconiumbis-(tetrahydrofuran) und 1.5 g (5.6 mmol) 1-(N-Phenylamido)ethylcyclopentadienyl-dilithium ergibt 1.6 g (3.84 mmol, 69 %) des rotbraunen, öligen Produktes. 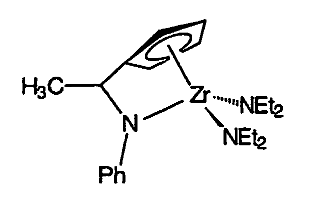 1H-NMR ([D₆]-Benzol, 599.8 MHz): δ = 7.26 (d, 3J = 7.8 Hz, 2H, m-Ph-H), 6.87 (t, 3J = 7.2 Hz, 2H, o-Ph-H), 6:74 (t, 3J = 7.2 Hz, 1H, p-Ph-H), 6.31, 6.00(m, je 1H, Cp-H), 6.07 (m, 2H, Cp-H), 5.00 (q, 3J = 6.6 Hz, 1H, 1-H), 3.33, 3.24, 3.19, 3.07 (m, je 2H, NCH₂), 1.52 (d, 3J = 6.6 Hz, 3H, 2-H), 1.00 (t, 3J = 6.6 Hz, 6H, NCH₂C*H*₃), 0.77 (t, 3J = 6.6 Hz, 6H, NCH₂C*H*₃).

TOCSY([D₆]-Benzol, 599.8 MHz) : Einstrahlen in δ = 1.52, Sekundärsignal 5.00, Einstrahlen in δ = 1.00, Sekundärsignale bei 3.24, 3.19, Einstrahlen in δ = 0.77, Sekundärsignale bei 3.33, 3.07.
13C-NMR ([D₆]-Benzol, 150.8 MHz) : δ = 152.0 (ipso-Ph), 129.2 (m-Ph), 117.1(p-Ph), 115.1 (o-Ph), 114.3, 111.6, 111.2, 109.6 (alle Cp), 51.4 (C-1), 43.8, 43.0 (beide NCH₂), 17.8 (C-2), 16.1, 15.9 (beide NCH₂CH₃).

GHSQC-NMR ([D₆]-Benzol, 150.8 / 599.8 MHz) : δ = 129.2 /7.26 (m-Ph-H / m-Ph-C), 117.1 / 6.74 (p-Ph-C / p-Ph-H), 115.1 / 6.87 (o-Ph-C / o-Ph-H), 114.3 / 6.00 (Cp-C / Cp-H), 111.6 / 6.31 (Cp-C / Cp-H), 111.2 / 6.07 (Cp-C / Cp-H), 109.6 / 6.07 (Cp-C / Cp-H), 51.4 / 5.00 (C-1 / 1-H), 43.8 / 3.24, 3.19 (NCH₂/ NCH₂), 43.0 / 3.33, 3.07 (NCH₂/ NCH₂), 17.8 / 1.52 (C-2 / 2-H), 16.1 / 1.00 (NCH₂CH₃ / NCH₂CH₃), 15.9 / 0.77 (NCH₂CH₃ / NCH₂CH₃).

| Elementaranalyse: | | | |
|---|---|---|---|
| berechnet: | C: 60.23 % | H: 7.94 % | N: 10.08 % |
| gefunden: | C: 59.28 % | H: 8.32 % | N: 9.41 % |

Bis (diethylamido) {η⁵:κN-1-(N-phenylamido)-p-tolylmethylcyclopentadienyl}-zirconium

900 mg (2 mmol) Bis(diethylamido)dichlorozirconiumbis-(tetrahydrofuran) und 548 mg [(N-Phenylamido)-p-Tolyl]methylcyclopentadienyldilithium werden zu 741 mg (1.5 mmol, 75 %) des dunkelbraunen, öligen Produktes umgesetzt. 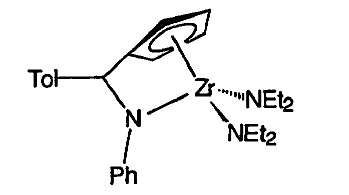 1H-NMR ([D₆]-Benzol, 599.8 MHz): δ = 7.37 (d, 3J = 7.8 Hz, 2H, o-Tol-H), 7.18 (t, 3J = 7.2 Hz, 2H, m-Ph-H), 7.02 (d, 3J = 7.8 Hz, 2H, m-Tol-H), 6.91 (d, 3J = 7.8 Hz, 2H, o-Ph-H), 6.70 (t, 3J = 7.8 Hz, 1H, p-Ph-H), 6.14, 5.90 (m, je 1H, 1'-H), 6.00, 5.96 (m, je 1H, 2'-H), 6.03 (s, 1H, 1-H), 3.38, 3.37, 3.28, 3.16 (m, je 2H, NCH₂), 2.12 (s, 3H, Tol-CH₃), 1.01 (t, 3J = 6.6 Hz, 6H, NCH₂C*H*₃), 0.87 (t, 3J = 6.6 Hz, 6H, NCH₂C*H*₃).

GCOSY ([D₆]-Benzol, 599.8 MHz) : δ¹H / δ¹H = 7.37 / 7 . 02 (m- / o-Tol-H), 7.18 / 6.91, 6.70 (m- / o-, p-Ph-H), 7.02 / 7.37 (o- / m-Tol-H). 6.91 / 7.18 (o- / m-Ph-H), 6.70 / 7.18 (p- / m-Ph-H), 6.14 / 6.10, 5.96, 5.90 (Cp-H), 3.38, 3.16 / 0.87 (NCH₂ / NCH₂CH₃), 3.37, 3.28 / 1.01 (NCH₂ / NCH₂CH₃) .TOCSY([D₆] -Benzol, 599.8 MHz): Einstrahlen in δ = 7.37, Sekundärsignal 7.02, Einstrahlen in δ = 6.70, Sekundärsignale bei 7.18, 6.91, Einstrahlen in δ = 1.01, Sekundärsignale bei 3.37, 3.28, Einstrahlen in δ = 0.87, Sekundärsignale bei 3.37, 3.16.
13C-NMR ([D₆]-Benzol, 150.8 MHz) : 152.2 (ipso-Ph), 139.7 (p-Tol), 136.2 (ipso-Tol), 129.4 (m-Tol), 129.1 (m-Ph), 127.0 (o-Tol), 117.2 (p-Ph), 115.4 (o-Ph), 114.4 (ipso-Cp), 114.3, 114.0 (beide C-1'), 111.0, 110.5 (beide C-2'), 60.2 (C-1), 43.7, 43.1 (beide NCH₂), 21.1 (Tol-CH₃), 16.0 (NCH₂CH₃).

GHSQC-NMR ([D₆]-Benzol, 150.8 / 599.8 MHz): δ = 129.4 / 7.02 (o-Tol-C / o-Tol-H), 129.1 / 7.18 (m-Ph-C / m-Ph-H), 127.0 / 7.38 (m-Tol-C / m-Tol-H), 117.2 / 6.70 (p-Ph-C / p-Ph-H), 115.4 / 6.91 (o-Ph-C / o-Ph-H), 114.3 / 6.14 (C-1' / 1'-H), 114.0 / 5.90 (C-1' / 1'-H), 111.0 / 6.00 (C-2' / 2'-H), 110.5 / 5.96 (C-2' / 2'-H), 60.2 / 6.03 (C-1 / 1-H), 43.7 / 3.37, 3.28 (NCH₂/ NCH₂), 43.1 / 3.38, 3.16 (NCH₂/ NCH₂), 21.1 / 2.12 (Tol-CH₃ / Tol-CH₃), 16.0 / 1.01,-0.87 (NCH₂CH₃ / NCH₂*C*H₃).

| Elementaranalyse: | | | |
|---|---|---|---|
| berechnet: | C: 65.54 % | H: 7.53 % | N: 8.49 % |
| gefunden: | C: 65.85 % | H: 7.97 % | N: 8.52 % |

Bis (diethylamido) {η5:κN-1-(N-phenylamido)*tert*butylmethylcyclopentadienyl}-zirconium

Durch Umsetzung von 450 mg (1 mmol) Bis(diethylamido)dichlorozirconiumbis-(tetrahydrofuran) mit 325 mg (1 mmol) (1-N-*p*-Tolyllamido-2,2-dimethyl)propylcyclopentadienyldilithium werden 313 mg (0.66 mmol, 66 %) des orangebraunen, öligen Produktes erhalten. 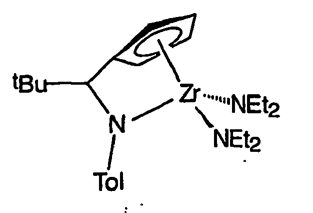 1H-NMR ([D₆]-Benzol, 599.8 MHz): 6.98 (d, 3J = 6.6 Hz, 2H, m-Tol-H), 6.94 (t, 3J = 6.6 Hz, 2H, o-Tol-H), 6.38, 5.93 (m, je 1H, 1'-H), 6.10, 6.07 (m, je 1H, 2'-H), 4.96 (s, 1H, 1-H), 3.31, 3.28, 3.19, 3.08 (m, je 2H, NCH₂), 2.19 (s, 3H, Tol-CH₃), 1.19 (s, 9H, 3-H), 1.06 (t, 3J = 4.8 Hz, 6H, NCH₂CH₃), 0.65 (t, 3J = 4.8 Hz, 6H, NCH₂C*H*₃).

GCOSY([D₆]-Benzol, 599.8 MHz): δ¹H / δ¹H = 6.98 / 6.94 (m- / o-Tol-H), 6.94 / 6.98 (o- / m-Tol-H), 6.38 / 6.10, 6.07, 5.93 (Cp-H), 3.31, 3.28 / 1.06 (NCH₂ / NCH₂C*H*₃), 3.19, 3.08 / 0.65 (NCH₂ / NCH₂C*H*₃).
13C-NMR ([D₆]-Benzol, 150.8 MHz): 152.3 (ipso-Tol), 129.7 (m-Tol), 127.4 (p-Tol), 119.0 (o-Tol), 115.5 (C-1'), 113.0 (C-1'), 112.8 (ipso-Cp), 111.6 (C-2'), 109.7 (C-2'), 66.2 (C-1), 43.6, 43.2 (beide NCH₂), 38.7 (C-2), 28.8 (C-3), 20.8 (Tol-CH₃), 15.7, 15.3 (beide NCH₂*C*H₃).

GHSQC-NMR ([D₆]-Benzol, 150.8 / 599.8 MHz): δ = 129.7 / 6.98 (m-Tol-C / m-Tol-H), 119.0 / 6.94 (o-Tol-C / o-Tol-H), 115.5 / 5.93 (C-1' / 1'-H), 113.0 / 6.38 (C-1' / 1'-H), 111.6 / 6.10 (C-2' / 2'-H), 109.7 / 6.07 (C-2' / 2'-H), 66.2 / 4.96 (C-1 / 1-H), 43.6 / 3.31, 3.28 (NCH₂/ NCH₂), 43.2 / 3.19, 3.08 (NCH₂/ NCH₂), 28.8 / 1.19 (C-3 / 3-H), 20.8 /2.19 (Tol-CH₃ / Tol-CH₃), 15.7 / 1.06 (NCH₂*C*H₃ / NCH₂C*H*₃), 15.3 / 0.65 (NCH₂*C*H₃ / NCH₂C*H*₃).

| Elementaranalyse: | | | |
|---|---|---|---|
| berechnet: | C: 63.23 % | H: 8.70 % | N: 8.85 % |
| gefunden: | C: 63.03 % | H: 8.01 % | N: 8.34 % |

Bis (diethylamido) {η⁵:κN-1-(N-*tert*butylamido)*tert*butylmethylcyclopentadienyl}-zirconium

450 mg (1 mmol) Bis(diethylamido)dichlorozirconiumbis-(tetrahydrofuran) und 219 mg (1mmol) (1-N-*tert*Butyllamido-2,2-dimethyl)propylcyclopentadienyldilithium ergeben 313 mg (0.71 mmol, 71 %) des hellgrünen, öligen Produktes. 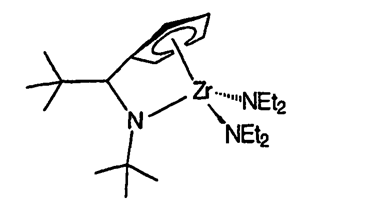 1H-NMR ([D₂]-Dichlormethan, 599.8 MHz): 6.30, 5.73 (m, je 1H, 1'-H), 6.13, 5.99 (m, je 1H, 2'-H), 4.40 (s, 1H, 1-H), 3.40, 3.19, 3.14, 3.07 (m, je 2H, NCH₂), 1.30 (s, 9H, NC(C*H*₃)₃), 1.19 (s, 9H, CC(C*H*₃)₃), 0.96 (t, 3J = 4.8 Hz, 6H, NCH₂C*H*₃), 0.92 (t, 3J = 4.8 Hz, 6H, NCH₂C*H*₃).

GCOSY([D₂]-Dichlormethan, 599.8 MHz): δ¹H / δ¹H = 3.40, 3.07 / 0.92 (NCH₂ / NCH₂CH₃), 3.19, 3.14 / 0.96 (NCH₂ / NCH₂CH₃).
13C-NMR ([D₂]-Dichlormethan, 150.8 MHz):113.8 (C-1'), 112.6 (C-1') 110.6 (C-2'), 107.6 (C-2'), 68.6 (C-1), 55.2 (N*C*(CH₃)₃), 45.2, 42.1 (beide NCH₂), 35.6 (*CC*(CH₃)₃), 31.1 (NC(*C*H₃)₃), 29.7 (CC(*C*H₃)₃), 15.4, 13.9 (beide NCH₂CH₃).

GHSQC-NMR ([D₂]-Dichlormethan, 150.8 / 599.8 MHz): δ = 113.8 / 5.73 (C-1' / 1'-H), 112.6 / 6.30 (C-1' / 1'-H), 110.6 / 6.13 (C-2' / 2'-H), 107.6 / 5.99 (C-2' / 2'-H), 68.6 / 4.40 (C-1 / 1-*H*), 45.2 / 3.40, 3.07 (N*C*H₂/ NC*H*₂), 42.1 / 3.19, 3.14 (NCH₂/ NCH₂), 31.1 / 1.30 (NC(*C*H₃)₃ / NC(*C*H₃)₃),), 29.7 / 1.19 (CC(*C*H₃)₃ / CC(C*H*₃)₃) 15.4 / 0.92 (NCH₂*C*H₃ / NCH₂*C*H₃), 13.9 / 0.96 (NCH₂*C*H₃ / NCH₂C*H*₃).

### Bis(diethylamido) {η⁵:κN-(N-tertbutylamidomethyl-2,3,4,5-tetramethylcyclopen-tadienyl}zirconium

Die Verbindung konnte im NMR-Versuch sauber dargestellt werden. Dazu wurden 21 mg (0.1 mmol) 1-*Tert*Butyllaminomethyl-2,3,4,5-tetramethylcyclopentadienyldi-lithium mit 45 mg (0.1 mmol) Bis(diethylamido)dichlorozirconiumbis-(tetrahydrofuran) eingewogen und in 0.5 ml [D₈]-THF zur Reaktion gebracht. Die Suspension klart nach ca. 30 min auf, wenn das Dilithiumsalz vollständig abreagiert hat. Die präparative Darstellung steht noch aus. 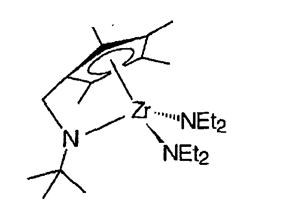 1H-NMR ([D₈]-THF, 200.13 MHz): 4.34 (s, 2H, 1-H), 3.5 - 3.2 (m, 8H, NCH₂), 2.08 (s, 6H, Cp-C*H*₃), 2.06 (s, 6H, Cp-C*H*₃), 1.15 (s, 9H, C(C*H*₃)₃, 0.97 (t, 3J = 4.8 Hz, 12H, NCH₂C*H*₃) .

## Patentansprüche

1. Verfahren zur Herstellung von Verbindungen der Formel (VII) 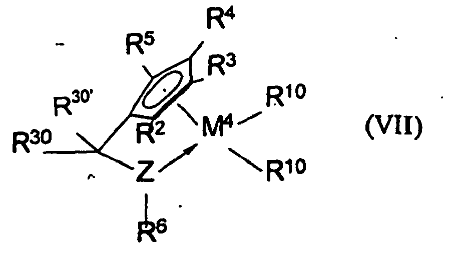 worin
R³⁰ ein Wasserstoffatom, C₁-C₁₈-Alkyl, C₃- bis C₁₂-Cycloalkyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist,
R^{30'} ein Wasserstoffatom oder C₁-C₁₈-Alkyl ist,
R², R³, R⁴, R⁵ gleich oder verschieden ein Wasserstoffatom, C₁-C₁₈-Alkyl, C₃ bis C₁₂ Cycloalkyl , C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist, die Reste R², R³, R⁴ und R⁵ können miteinander cyclische Systeme bilden, die ihrerseits wiederum substituiert sind,
R⁶ ein Wasserstoffatom, C₁-C₁₈-Alkyl, C₃- bis C₁₂-Cycloalkyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl ist,
R¹⁰ ein Wasserstoffatom, ein Halogenatom, C₁-C₁₈-Alkyl, C₃-bis C₁₂-Cycloalkyl, ein C₆-C₂₀ Aryl, eine C₆-C₂₀-Aryloxy-Gruppe, eine C₁-C₂₀ Alkyloxy-Gruppe, ein stickstoffhaltiger Rest ist,
Z Phosphor oder Stickstoff ist,
M⁴ Titan, Zirconium, Hafnium, Vanadium, Niob, Tantal, Chrom, Molybdän oder Wolfram ist,
umfassend die Schritte
A) Umsetzung einer Verbindung der Formel I 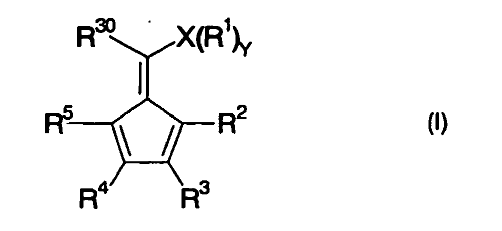 worin,
R¹ gleich oder verschieden, ein Wasserstoffatom, C₁-C₁₈-Alkyl, C₃- bis C₁₂-Cycloalkyl , C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist und R², R³, R⁴, R⁵ die unter Formel (VII) genannte Bedeutung haben,
X Stickstoff ist,
y 2 ist,
R³⁰ die oben genannte Bedeutung hat,
mit einer Verbindung der Formel (II),
M¹ R⁶ZR⁷ (II)
worin
Z und R⁶ die unter Formel (VII) genannte Bedeutung haben,
M¹ ein Element der 1. Gruppe des Periodensystems der Elemente ist,
R⁷ ein Wasserstoffatom
ist, zu einer Verbindung der Formel (III) 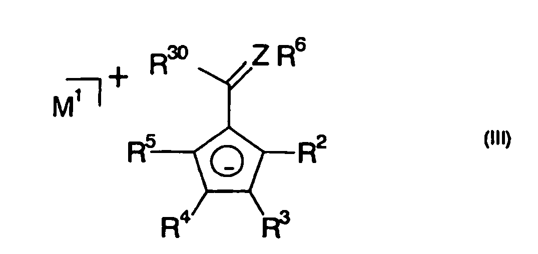 worin R², R³, R⁴, R⁵, R⁶, R³⁰, Z und M¹ die oben beschriebenen Bedeutungen haben
B) Umsetzung der gemäß Schritt A) erhaltenen Verbindung der Formel (III) mit einer metallorganischen Verbindung der Formel IV
M²R^{30'} (IV)
worin
M² ein Element der 1. Gruppe des Periodensystems der Elemente ist,
R^{30'} ein Wasserstoffatom oder C₁-C₁₈-Alkyl ist, zu einer Verbindung der Formel (V) 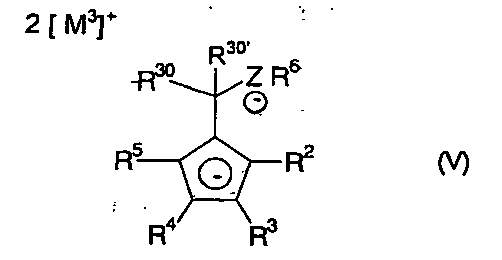
worin
R², R³, R⁴, R⁵, R⁶, R³⁰, R^{30'} und Z die oben beschriebene Bedeutung haben und
M³ ein Element der 1. Gruppe des Periodensystems der Elemente ist,
C) Umsetzung der gemäß Schritt B) erhaltenen Verbindung der Formel (V) mit einer Verbindung der Formel (VI)
M⁴(R⁹)_{f}(R¹⁰)_{g}(R¹¹)ₖ (VI)
worin
M⁴ Titan, Zirconium, Hafnium, Vanadium, Niob, Tantal, Chrom, Molybdän oder Wolfram ist,
R⁹ ein Wasserstoffatom, ein Halogenatom, eine C₁-C₂₀ Kohlenstoffgruppe, ein C₆-C₂₀ Aryl, eine C₆-C₂₀-Aryloxy-Gruppe, ein C₁-C₂₀ Alkyloxy ist,
R¹⁰ ein wasserstoffatom, ein Halogenatom, C₁-C₁₈-Alkyl, C₃-bis C₁₂-Cycloalkyl, ein C₆-C₂₀ Aryl, eine C₆-C₂₀-Aryloxy-Gruppe, ein stickstoffhaltiger Rest, ein C₁-C₂₀ Alkyloxy ist,
R¹¹ C₁-C₂₀-Heterokohlenstoffverbindung ist,
f 2 ist,
g 2 ist,
k eine Zahl von 1-10 ist,
zur Verbindung der allgemeinen Formel (VII).

2. Verbindung der Formel (VII - A) 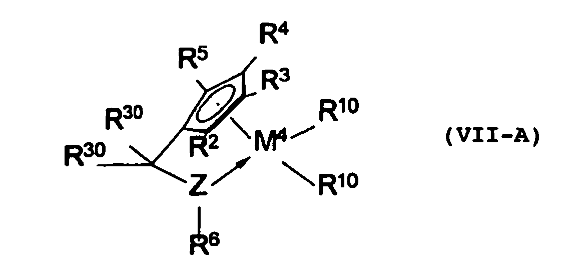 worin
R³⁰ ein wasserstoffatom, C₁-C₁₈-Alkyl, , C₃- C₁₂-Cycloalkyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist, wobei die R³⁰-Substituenten nicht gemeinsam die gleiche Bedeutung haben oder gemeinsam die gleiche Bedeutung haben,
R², R³, R⁴, R⁵ gleich oder verschieden, ein Wasserstoffatom, C₁-C₁₈-Alkyl, C₃-C₁₂-Cycloalkyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist die Reste R², R³, R⁴ und R⁵ können miteinander cyclische Systeme bilden, die ihrerseits wiederum substituiert sein können,
R⁶ ein Wasserstoffatom, C₁-C₁₈-Alkyl, C₃-C₁₂-Cycloalkyl C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl ist,
R¹⁰ ein Wasserstoffatom, ein Halogenatom, eine C₁-C₂₀ Kohlenstoffgruppe, ein C₆-C₂₀ Aryl, ein C₆-C₂₀-Aryloxy-Gruppe, eine C₁-C₂₀ Alkyloxy-Gruppe oder ein stickstoffhaltiger Rest ist,
Z Phosphor ist,
M⁴ Titan, Zirconium, Hafnium, Vanadium, Niob, Tantal, Chrom, Molybdän oder Wolfram ist.

3. Katalysatorsystem enthaltend
A) mindestens einen Cokatalysator,
B) mindestens eine Verbindung der Formel (VIIA) gemäß Anspruch 2,
C) gegebenenfalls mindestens einen Träger.

4. Verwendung der verbindung (VIIA) gemäß Anspruch 2 zur Polymerisation von Olefinen.

5. Verwendung des Katalysatorsystems gemäß Anspruch 3 zur Polymerisation von Olefinen.

## Claims

1. A process for preparing compounds of the formula (VII) 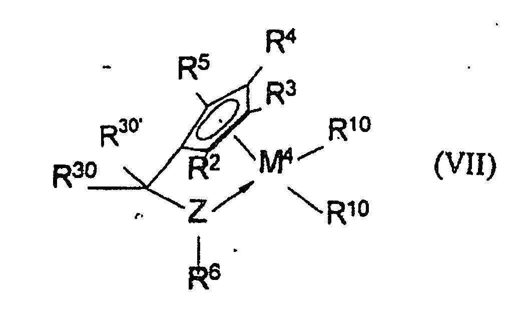 where
R³⁰ is hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl,
R^{30'} is a hydrogen atom or a C₁-C₁₈-alkyl,
R², R³, R⁴, R⁵ are identical or different and are each hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, or the radicals R², R³, R⁴ and R⁵ may among one another form cyclic systems which may in turn be substituted,
R⁶ is hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl or C₇-C₂₀-alkylaryl,
R¹⁰ is hydrogen, halogen, C₁-C₁₈-alkyl, C₃-C₁₂-cycloalkyl, C₆-C₂₀ aryl, C₆-C₂₀-aryloxy, C₁-C₂₀-alkyloxy or a nitrogen-comprising radical,
Z is phosphorus or nitrogen,
M⁴ is titanium, zirconium, hafnium, vanadium, niobium, tantalum, chromium, molybdenum or tungsten,
comprising the steps
A) reaction of a compound of the formula I 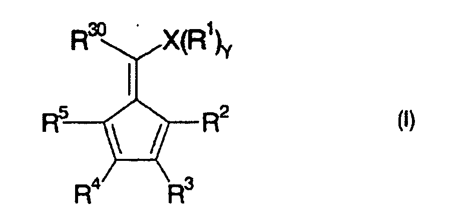 where,
R¹ are identical or different and are each hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, and R², R³, R⁴, R⁵ are as defined under formula (VII),
X is nitrogen,
y is 2,
R³⁰ is as defined above,
with a compound of the formula II,
M¹ R⁶ZR⁷ (II)
where
Z and R⁶ are as defined under formula (VII),
M¹ is an element of group 1 of the Periodic Table of the Elements,
R⁷ is hydrogen, to form a compound of the formula (III) 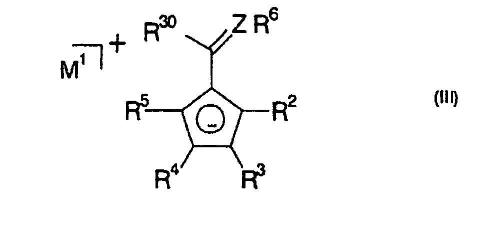
where R², R³, R⁴, R⁵, R⁶, R³⁰, Z and M¹ are as defined above,
B) reaction of the compound of the formula (III) obtained as described in step A) with an organometallic compound of the formula IV
M²R^{30'} (IV)
where
M² is an element of group 1 of the Periodic Table of the Elements,
R^{30'} is hydrogen or C₁-C₁₈-alkyl, to form a compound of the formula (V) 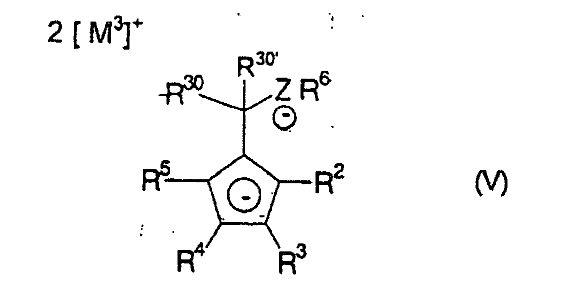
where
R², R³, R⁴, R⁵, R⁶, R³⁰, R^{30'} and Z are as defined above and
M³ is an element of group 1 of the Periodic Table of the Elements,
C) reaction of the compound of the formula (V) obtained as described in step B) with a compound of the formula (VI)
M⁴ (R⁹)_{f} (R¹⁰)_{g} (R¹¹)ₖ (VI)
where
M⁴ is titanium, zirconium, hafnium, vanadium, niobium, tantalum, chromium, molybdenum or tungsten,
R⁹ is hydrogen, halogen, a C₁-C₂₀-organic group, C₆-C₂₀-aryl, C₆-C₂₀-aryloxy, C₁-C₂₀-alkyloxy,
R¹⁰ is hydrogen, halogen, C₁-C₁₈-alkyl, C₃-C₁₂-cycloalkyl, C₆-C₂₀-aryl, C₆-C₂₀-aryloxy, a nitrogen-comprising radical, C₁-C₂₀-alkyloxy,
R¹¹ is a C₁-C₂₀-heteroorganic compound,
f is 2
g is 2
k is from 1-10,
to give the compound of the formula (VII).

2. A compound of the formula (VII - A) 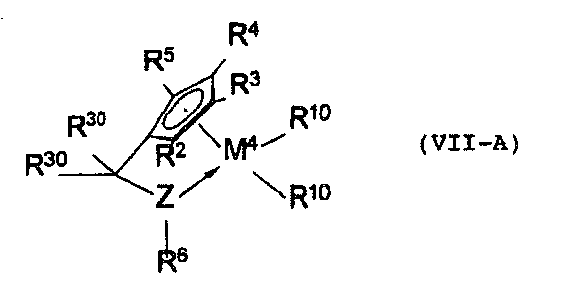 where
R³⁰ is hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, where the substituents R³⁰ do not both have the same meaning or both have the same meaning,
R², R³, R⁴, R⁵ are identical or different and are each hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, or the radicals R², R³, R⁴ and R⁵ may among one another form cyclic systems which may in turn be substituted,
R⁶ is hydrogen, C₁-C₁₈-alkyl, C₃-C₁₂-cycloalkyl, C₂-C₁₀-alkenyl, C₃-C₁₅-alkylalkenyl, C₆-C₁₈-aryl, C₅-C₁₈-heteroaryl, C₇-C₂₀-arylalkyl, C₇-C₂₀-alkylaryl,
R¹⁰ is hydrogen, halogen, a C₁-C₂₀-organic group, C₆-C₂₀-aryl, C₆-C₂₀-aryloxy, C₁-C₂₀-alkyloxy or a nitrogen-comprising radical,
Z is phosphorus,
M⁴ is titanium, zirconium, hafnium, vanadium, niobium, tantalum, chromium, molybdenum or tungsten.

3. A catalyst system comprising
A) at least one cocatalyst,
B) at least one compound of the formula (VII) as claimed in claim 1,
C) if appropriate, at least one support.

4. The use of the compound (VII) according to claim 2 for the polymerization of olefins.

5. The use of the catalyst system according to claim 3 for the polymerization of olefins.

## Revendications

1. Procédé de fabrication de composés de formule (VII) : 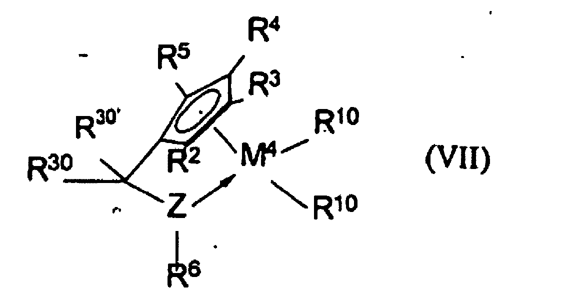 où :
R³⁰ est un atome d'hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un arylalkyle en C₇-C₂₀ fluoré ou un alkylaryle en C₇-C₂₀ fluoré,
R^{30'} est un atome d'hydrogène ou un alkyle en C₁-C₁₈,
R ² R³ R⁴ et R⁵ sont de manière identique ou différente un atome d'hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un arylalkyle en C₇-C₂₀ fluoré ou un alkylaryle en C₇-C₂₀ fluoré, les radicaux R² R³, R⁴ et R⁵ pouvant former des systèmes cycliques les uns avec les autres, qui de leur côté seront à nouveau substitués,
R⁶ est un atome d'hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀,
R¹⁰ est un atome d'hydrogène, un atome d'halogène, un alkyle en C₁-C₁₈, un cycloalkyle en C₃-C₁₂, un aryle en C₆-C₂₀, un groupe aryloxy en C₆-C₂₀, un groupe alkyloxy en C₁-C₂₀, un radical azoté,
Z est un phosphore ou un azote,
M⁴ est un titane, un zirconium, un hafnium, un vanadium, un niobium, un tantale, un chrome, un molybdène ou un tungstène,
comprenant les étapes :
A) de réaction d'un composé de formule I : 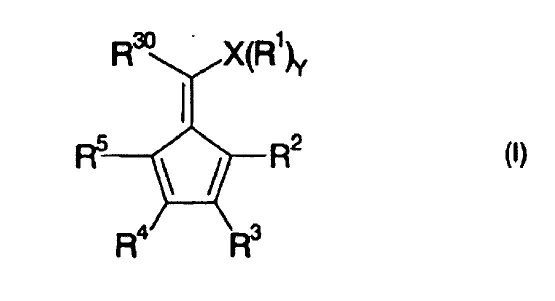 où :
R¹ est identiquement ou différemment un atome d'hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un arylalkyle en C₇-C₂₀ fluoré ou un alkylaryle en C₇-C₂₀ fluoré, et R², R³, R⁴ et R⁵ ont la même signification que celle indiquée pour la formule (VII),
X est un azote,
y est 2
R³⁰ a la même signification que ci-dessus mentionné,
avec un composé de formule (II) :
M¹R⁶ZR⁷ (II)
où :
Z et R⁶ ont la même signification que celle indiquée pour la formule (VII),
M¹ est un élément du premier groupe de la classification périodique des éléments,
R⁷ est un atome d'hydrogène, pour donner un composé de formule (III) : 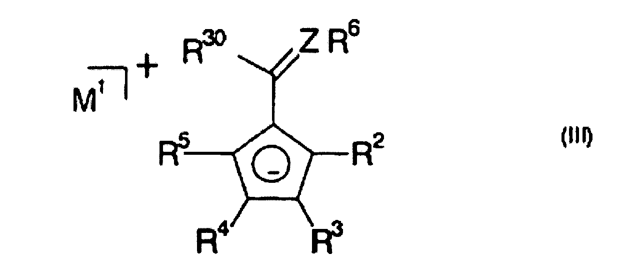
où R², R³, R⁴, R⁵, R⁶, R³⁰, Z et M¹ ont la signification décrite plus haut,
B) de réaction du composé obtenu selon l'étape A) de formule (III) avec un composé organométallique de formule (IV) :
M²R^{30'} (IV)
où :
M² est un élément du premier groupe de la classification périodique des éléments,
R^{30'} est un atome d'hydrogène ou un alkyle en C₁-C₁₈, pour donner un composé de formule (V) : 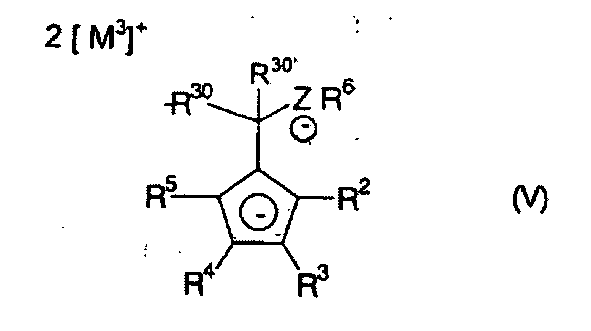
où
R², R³, R⁴, R⁵, R⁶, R³⁰, R^{30'} et Z ont la signification décrite plus haut, et
M³ est un élément du premier groupe de la classification périodique des éléments,
C) de réaction du composé obtenu selon l'étape B) de formule (V) avec un composé de formule (VI) :
M⁴ (R⁹) _{f} (R¹⁰) _{g} (R¹¹) ₖ (VI)
où :
M⁴ est du titane, du zirconium, de l'hafnium, du vanadium, du niobium, du tantale, du chrome, du molybdène ou du tungstène,
R⁹ est un atome d'hydrogène, un atome d'halogène, un groupement carboné en C₁-C₂₀, un aryle en C₆-C₂₀, un groupe aryloxy en C₆-C₂₀, un alkyloxy en C₁-C₂₀,
R¹⁰ est un atome d'hydrogène, un atome d'halogène, un alkyle en C₁-C₁₈, un cycloalkyle en C₃-C₁₂, un aryle en C₆-C₂₀, un groupe aryloxy en C₆-C₂₀, un radical azoté, un alkyloxy en C₁-C₂₀
R¹¹ est un composé hétérocarboné en C₁-C₂₀,
f est 2,
g est 2,
k est un chiffre entre 1 et 10,
pour donner un composé de formule (VII).

2. Composé de formule (VII-A) 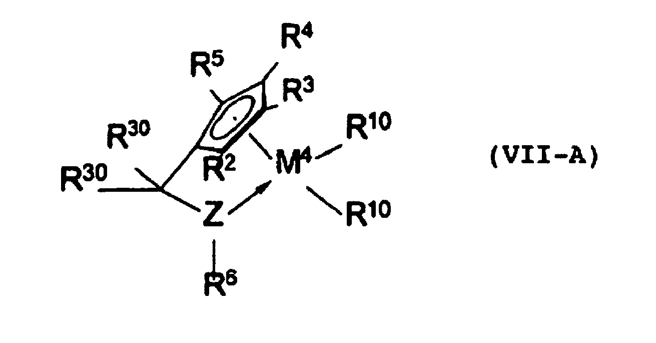 où :
R³⁰ est un atome d'hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un arylalkyle en C₇-C₂₀ fluoré ou un alkylaryle en C₇-C₂₀ fluoré, où les substituants de R³⁰ n'ont pas ensemble la même signification ou ont ensemble la même signification,
R², R³, R⁴ et R⁵ sont identiquement ou différemment un atome d'hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un arylalkyle en C₇-C₂₀ fluoré ou un alkylaryle en C₇-C₂₀ fluoré, les radicaux R², R³, R⁴ et R⁵ peuvent former des systèmes cycliques les uns avec les autres, qui de leur côté seront à nouveau substitués,
R⁶ est un atome d' hydrogène, un alkyle en C₁-C₁₈, un cycloalkyle en C₃-C₁₂, un alcényle en C₂-C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀,
R¹⁰ est un atome d'hydrogène, un atome d'halogène, un groupe de carbone en C₁-C₂₀, un aryle en C₆-C₂₀, un groupe aryloxy en C₆-C₂₀, un groupe alkyloxy en C₁-C₂₀ ou un radical azoté,
Z est un phosphore,
M⁴ est du titane, du zirconium, de l'hafnium, du vanadium, du niobium, du tantale, du chrome, du molybdène ou du tungstène.

3. Système catalyseur contenant :
A) au moins un co-catalyseur,
B) au moins un composé de formule (VII-A) selon la revendication 2,
C) éventuellement au moins un support.

4. Utilisation du composé (VII-A) selon la revendication 2 pour la polymérisation d'oléfines.

5. Utilisation du système catalyseur selon la revendication 3 pour la polymérisation d'oléfines.
